# EUROPEAN PATENT APPLICATION

(11) **EP 4 845 204 A1**
(43) Date of publication of application: **25.11.2026**
(21) Application number: 24917639.7
(22) Date of filing: 15.01.2024
(51) Int. Cl.: H04W 24/08

(54) **COMMUNICATION METHOD, APPARATUS AND DEVICE, CHIP, AND STORAGE MEDIUM**

(71) Applicant: GUANGDONG OPPO MOBILE TELECOMMUNICATIONS CORP., LTD., Dongguan, Guangdong 523860 (CN)
(72) Inventor: CAO, Jianfei, Dongguan, Guangdong 523860 (CN); LIU, Wendong, Dongguan, Guangdong 523860 (CN)
(74) Representative: Penza, Giancarlo
(86) International application number: PCT/CN2024/072411
(87) International publication number: WO 2025/152011

(57) **Abstract**

The present application provides a communication method, apparatus and device, a chip, and a storage medium. The method comprises: a terminal device acquires first link quality, wherein the first link quality is link quality of a first cell and/or a first spatial filter within a first time period, the first link quality is used for determining a prediction result, the prediction result is related to a second cell and/or a second spatial filter on which the terminal device camps within a second time period, and an ending moment of the first time period is earlier than a starting moment of the second time period.

## Description

### TECHNICAL FIELD

The present disclosure relates to the technical field of communication, and in particular to communication methods and apparatuses, a device, a chip, and a storage medium.

### BACKGROUND

In related art, after the link quality of a spatial filter and/or a cell where a terminal device currently dwells degrades to a certain extent, the terminal device may trigger measurement of candidate cells and/or candidate spatial filters, and report the measured link quality of the candidate cells and/or candidate spatial filters to a network device, so that the network device can instruct the terminal device to switch from the currently dwelling cell and/or spatial filter based on the link quality. However, such cell switch and/or spatial filter switch often suffers from time instant lag, which may result in degraded link performance due to untimely switch, thereby increasing the risk of radio link failure of the terminal device.

### SUMMARY

The present disclosure provides communication methods and apparatuses, a device, a chip, and a storage medium.

In a first aspect, a communication method provided by the present disclosure includes that:
a terminal device obtains first link quality, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

In a second aspect, a communication method provided by the present disclosure includes that:
a network device receives first link quality from a terminal device, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

In a third aspect, a communication method provided by the present disclosure includes that:
a network device receives capability information of a terminal device, where the capability information of the terminal device is used to indicate that the terminal device supports obtaining first link quality; and/or supports determining a prediction result based on the first link quality, the prediction result being related to a second cell and/or a second spatial filter where the terminal device is to dwell within a second time period,
wherein the first link quality is link quality of a first cell and/or a first spatial filter within a first time period, and an end time of the first time period is earlier than a start time of the second time period.

In a fourth aspect, the present disclosure provides a communication apparatus implemented by a terminal device, the apparatus including:
a first processing unit, configured to obtain first link quality, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

In a fifth aspect, the present disclosure provides a communication apparatus implemented by a network device, the apparatus including:
a second receiving unit, configured to receive first link quality from a terminal device, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

In a sixth aspect, the present disclosure provides a communication apparatus implemented by a network device, the apparatus including:
a third receiving unit, configured to receive capability information of a terminal device, where the capability information of the terminal device is used to indicate that the terminal device supports obtaining first link quality; and/or supports determining a prediction result based on the first link quality, the prediction result being related to a second cell and/or a second spatial filter where the terminal device is to dwell within a second time period,
where the first link quality is link quality of a first cell and/or a first spatial filter within a first time period, and an end time of the first time period is earlier than a start time of the second time period.

In a seventh aspect, the present disclosure provides a communication device, the communication device including a memory, a processor, and a transceiver. The memory is configured to store a computer program; the processor is connected to the memory, and configured to invoke and run the computer program from the memory to implement the method of any one of the first aspect to the third aspect; the transceiver is configured to receive and transmit information during a process of transmitting and receiving information to and from other external devices.

In an eighth aspect, the present disclosure provides a chip, the chip including a memory, a processor, and a transceiver. The memory is configured to store a computer program; the processor is connected to the memory, and configured to invoke and run the computer program from the memory, so that a device mounted with the chip performs the method of any one of the first aspect to the third aspect; the transceiver is configured to receive and transmit information during information transceiving between itself and devices or chips.

In a ninth aspect, the present disclosure provides a computer-readable storage medium which has stored a computer program that, when executed by at least one processor, implements the method of any one of the first aspect to the third aspect.

In a tenth aspect, the present disclosure provides a computer program product including a computer storage medium storing a computer program that includes instructions executable by at least one processor, which when executed by the at least one processor, implement the method of any one of the first aspect to the third aspect.

In an eleventh aspect, the present disclosure provides a computer program that, when run on a computer, causes the computer to perform the method of any one of the first aspect to the third aspect.

The present disclosure provides communication methods, in which a terminal device may obtain first link quality, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period. In this way, the terminal device may perform cell switch and/or spatial filter switch in a timely manner based on the prediction result determined from the first link quality, so that the terminal device can directly switch from a cell and/or spatial filter with good link quality to another cell and/or spatial filter with good link quality, without experiencing performance degradation caused by untimely cell switch and/or spatial filter switch, thereby reducing the risk of radio link failure.

### BRIEF DESCRIPTION OF THE DRAWINGS

The accompanying drawings described herein are provided for a further understanding of the present disclosure and constitute a part thereof. The exemplary embodiments of the present disclosure and their descriptions are used to interpret the present disclosure and do not constitute an improper limitation thereof. In the accompanying drawings:
FIG. 1 is a schematic diagram of a communication architecture;
FIG. 2 is a schematic diagram of a neuron structure;
FIG. 3 is a schematic diagram of a neural network structure;
FIG. 4 is a schematic diagram of a long-short term memory structure;
FIG. 5 is a schematic flowchart of a communication method provided by an embodiment of the present disclosure;
FIG. 6 is a first detailed schematic flowchart of a communication method provided by an embodiment of the present disclosure;
FIG. 7 is a first schematic diagram of determining a prediction result provided by an embodiment of the present disclosure;
FIG. 8 is a second schematic diagram of determining a prediction result provided by an embodiment of the present disclosure;
FIG. 9 is a third schematic diagram of determining a prediction result provided by an embodiment of the present disclosure;
FIG. 10 is a fourth schematic diagram of determining a prediction result provided by an embodiment of the present disclosure;
FIG. 11 is a second detailed schematic flowchart of a communication method provided by an embodiment of the present disclosure;
FIG. 12 is a schematic diagram of a scenario for predicting a best candidate cell and/or a best beam provided by an embodiment of the present disclosure;
FIG. 13 is a third detailed schematic flowchart of a communication method provided by an embodiment of the present disclosure;
FIG. 14 is a fourth detailed schematic flowchart of a communication method provided by an embodiment of the present disclosure;
FIG. 15 is a schematic structural composition diagram of a communication apparatus 1500 provided by an embodiment of the present disclosure;
FIG. 16 is a schematic structural composition diagram of a communication apparatus 1600 provided by an embodiment of the present disclosure;
FIG. 17 is a schematic structural composition diagram of a communication apparatus 1700 provided by an embodiment of the present disclosure;
FIG. 18 is a schematic structural composition diagram of a communication device provided by an embodiment of the present disclosure;
FIG. 19 is a schematic structural diagram of a chip provided by an embodiment of the present disclosure; and
FIG. 20 is a schematic block diagram of a communication system provided by an embodiment of the present disclosure.

### DETAILED DESCRIPTION

The technical solutions in the embodiments of the present disclosure will be described below with reference to the accompanying drawings in the embodiments of the present disclosure. The described embodiments are part of the embodiments of the present disclosure, rather than all of the embodiments. Based on the embodiments in the present disclosure, all other embodiments obtained by a person of ordinary skill in the art without creative efforts shall fall within the protection scope of the present disclosure.

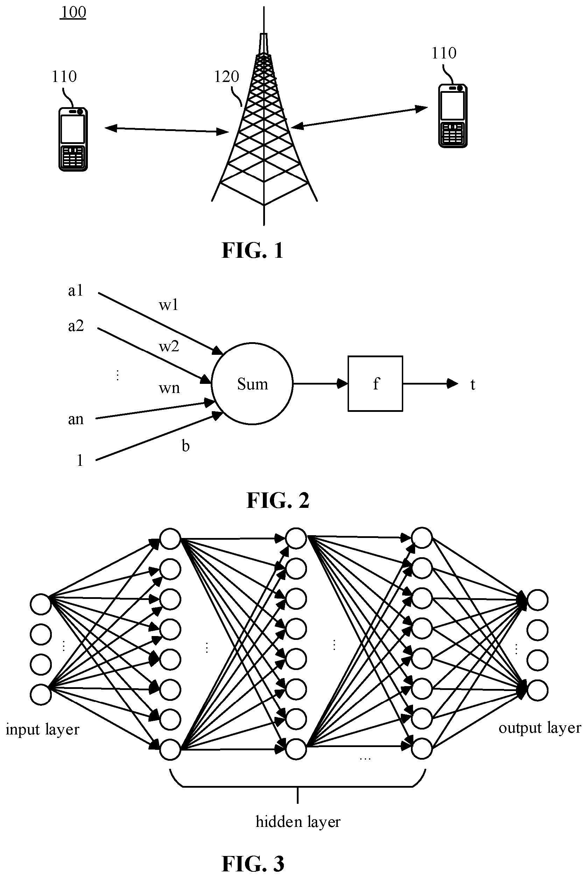

FIG. 1 is a schematic diagram of an application scenario according to an embodiment of the present disclosure.

As shown in FIG. 1, a communication system 100 may include a terminal device 110 and a network device (Network, NW) 120. The network device 120 may communicate with the terminal device 110 over an air interface. Multi-service transmission is supported between the terminal device 110 and the network device 120.

It should be understood that the embodiments of the present disclosure are merely exemplarily described with the communication system 100, but the embodiments of the present disclosure are not limited thereto. That is, the technical solutions of the embodiments of the present disclosure may be implemented by various communication systems, for example: a Long Term Evolution (LTE) system, LTE Time instant Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), a future communication system, or the like.

In the communication system 100 in FIG. 1, the network device 120 may be an access network device that communicates with the terminal device 110. The access network device may provide communication coverage for a specific geographic area, and may communicate with the terminal device 110 located within the coverage area.

The network device 120 may be an Evolutional Node B (eNB or eNodeB) in an LTE system, or a Next Generation Radio Access Network (NG RAN) device, or a base station (gNB) in an NR system, or a radio controller in a Cloud Radio Access Network (CRAN), or the network device 120 may be a relay station, an access point, an in-vehicle device, a wearable device, a hub, a switch, a bridge, a router, or a network device in a future evolved Public Land Mobile Network (PLMN), or the like.

The terminal device 110 may be any terminal device, including but not limited to a terminal device connected to the network device 120 or another terminal device in a wired or wireless manner.

For example, the terminal device 110 may refer to an access terminal, User Equipment (UE), a subscriber unit, a subscriber station, a mobile station, a mobile platform, a remote station, a remote terminal, a mobile device, a user terminal, a terminal, a wireless communication device, a user agent, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device or another processing device connected to a wireless modem, an in-vehicle device, a wearable device, a terminal device in a 5G network, a terminal device in a future evolved network, or the like.

The terminal device 110 may be used for Device-to-Device (D2D) communication.

FIG. 1 exemplarily shows one network device and two terminal devices. Optionally, the communication system 100 may include multiple network devices, and the coverage area of each network device may include other numbers of terminal devices, which is not limited in the embodiments of the present disclosure.

It should be noted that FIG. 1 only schematically shows a system to which the present disclosure is applied by way of example. Tthe methods shown in the embodiments of the present disclosure may also be implemented by other systems. In addition, the terms "system" and "network" are often used interchangeably herein.

It should be understood that the term "and/or" herein is merely an association relationship describing associated objects, indicating that three relationships may exist, for example, A and/or B may indicate: A exists alone, A and B exist simultaneously, and B exists alone. In addition, the character "/" herein generally indicates that the associated objects are in an "or" relationship.

It should also be understood that the "indication" mentioned in the embodiments of the present disclosure may be a direct indication, an indirect indication, or an indication of an association relationship. For example, A indicates B may mean that A directly indicates B, for example, B may be obtained through A; it may also mean that A indirectly indicates B, for example, A indicates C, and B may be obtained through C; or it may mean that an association relationship exists between A and B.

It should also be understood that the "correspond" mentioned in the embodiments of the present disclosure may mean a direct correspondence or an indirect correspondence between the two, an association relationship between the two, or a relationship of indicating and indicated, configuring and configured, or the like.

It should also be understood that the "predefined" or "predefined rule" mentioned in the embodiments of the present disclosure may be implemented by pre-storing corresponding codes, tables in a device (for example, including a terminal device and a network device) or in other manners for indicating relevant information, and the specific implementation of the present disclosure is not limited thereto. For example, predefined may mean defined in a protocol. It should also be understood that in the embodiments of the present disclosure, the "protocol" may refer to a standard protocol in the communication field, which for example, may include an LTE protocol, an NR protocol, and related protocols applied to a future communication system, which is not limited in the present disclosure.

To facilitate understanding of the technical solutions of the embodiments of the present disclosure, related technologies of the embodiments of the present disclosure are described below. The following related technologies may be optionally combined with the technical solutions of the embodiments of the present disclosure, all of which fall within the protection scope of the embodiments of the present disclosure.

Compared with Inter-Cell Beam Management (ICBM) in Rel.17, in L1/L2-triggered mobility management of Rel.18, physical layer standardization work mainly focuses on measurement and reporting of candidate cells and/or candidate spatial filters by a terminal device, and indication of a selected candidate cell and/or a selected spatial filter by a network device through a Cell Switch Command (CSC).

The selected candidate cell is a target cell. For example, the network device may indicate an index of the selected candidate cell (Candidate Cell Index) through the CSC, so that the terminal device may switch to the target cell according to the index of the selected candidate cell.

The selected spatial filter is a target spatial filter. For example, the network device may indicate an identifier of a unified Transmission Configuration Indication state (TCI State ID) through the CSC, so that the terminal device may switch to the target spatial filter according to the unified TCI State ID.

Exemplarily, after the terminal device completes measurement of candidate cells and/or candidate spatial filters and reports measured link quality to the network device, the network device may indicate, through Media Access Control-Control Element (MAC CE) signaling of the CSC, the terminal device to switch to a target cell and/or a target spatial filter. The CSC includes at least spatial filter information of the target cell (indicated by a TCI State) and target cell information (such as an index of the selected candidate cell).

It should be noted that measurement of a candidate cell by the terminal device may be understood as measurement of a reference signal on the candidate cell by the terminal device. Further, measurement of a candidate cell by the terminal device is actually measurement of a spatial filter of the candidate cell, that is, the terminal device may measure a reference signal on the spatial filter of the candidate cell.

It should also be noted that measurement of a candidate cell by the terminal device may obtain cell-level link quality, such as cell-level Reference Signal Receiving Power (RSRP), Signal to Interference plus Noise Ratio (SINR), Received Signal Strength Indicator (RSSI), Reference Signal Received Quality (RSRQ), Channel Quality Indicator (CQI), and the like.

It should also be noted that measurement of a spatial filter of a candidate cell by the terminal device may obtain spatial filter-level link quality, such as spatial filter-level RSRP, SINR, RSSI, RSRQ, CQI, and the like.

For measurement and reporting of candidate cells and/or candidate spatial filters, the terminal device may perform measurement among multiple candidate cells (including a current serving cell) and/or multiple candidate spatial filters configured by the network device, and provide up to *M* × *L* link qualities in one report (depending on capabilities of the terminal device, where M is the number of candidate cells and L is the number of spatial filters of each candidate cell).

It should be noted that measurement of a large number of candidate cells requires use of a large number of reference signals, resulting in relatively high overhead of reference signals. In addition, since the terminal device often cannot simultaneously measure multiple spatial filters of multiple candidate cells, the time instant delay required for the terminal device to measure a large number of candidate cells is also relatively large.

An Artificial Intelligence (AI) model is a model capable of handling various tasks, has self-learning and self-adaptive capabilities, and can perform dynamic adjustment and decision-making according to changes in the environment. An AI model may also be referred to as a Machine Learning (ML) model, and the two are equivalent or interchangeable.

In practical applications, an AI model may be composed of a Neural Network (NN). An NN is an operation model composed of multiple neuron nodes connected to each other, where connections between nodes represent weighted values from an input signal to an output signal, referred to as weights; each node performs weighted summation on different input signals and outputs through a specific activation function. Reference is made to the schematic diagram of a neuron structure shown in FIG. 2, where a1, a2, ..., an and 1 are inputs of the neuron, w1, w2, ..., wn and b represent weights, Sum represents a summation function, f represents an activation function, and t is an output result.

A simple NN structure is shown in FIG. 3, including an input layer, a hidden layer, and an output layer. Different outputs may be generated through different connection modes, weights, and activation functions of multiple neurons, so as to fit a mapping relationship from input to output. Each upper-level node is connected to all its lower-level nodes. Such a fully connected model may also be referred to as a Deep Neural Network (DNN). The NN shown in FIG. 3 may perform spatial filter prediction in a spatial domain.

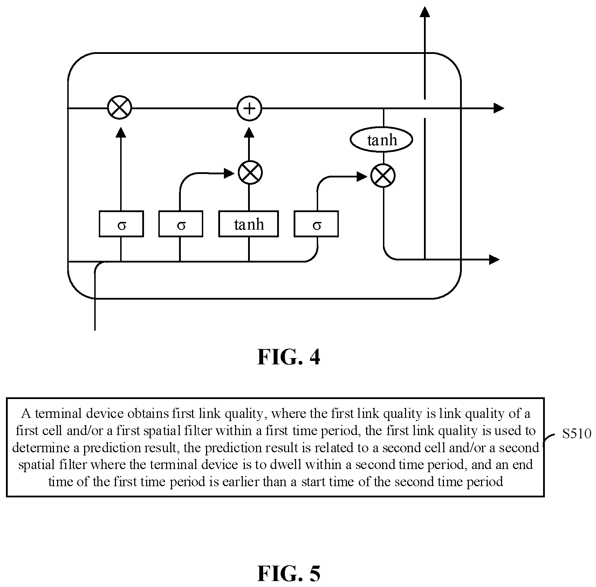

A Recurrent Neural Network (RNN) is a neural network for modeling sequence data, and has achieved remarkable results in applications such as machine translation and speech recognition in the field of natural language processing. Specifically, the neural network memorizes information of a past time instant and uses the information in calculation of a current output, that is, nodes between hidden layers are connected instead of being unconnected, and an input of a hidden layer includes not only an input layer but also an output of a hidden layer at a previous time instant. A common RNN may include structures such as Long-Short Term Memory (LSTM) and Gated Recurrent Unit (GRU). FIG. 4 shows a basic LSTM unit structure, which usually uses a nonlinear activation function such as tanh to introduce nonlinearity of the network. The state of the LSTM determines which states should be retained and which states should be forgotten, solving the defect of a conventional RNN in long-term memory.

The LSTM shown in FIG. 4 may be used for time instant-domain prediction. The embodiment of the present disclosure is described using LSTM as an example. It should be understood that the RNN may also be replaced with other network structures such as DNN and CNN.

An NN model may be trained and obtained through processes such as dataset construction, training, verification, and testing. Training may be divided into offline training and online training. The embodiment of the present disclosure assumes that the NN model has been trained in advance through offline training or online training. It should be understood that offline training and online training are not mutually exclusive.

A network device may obtain a static training result through dataset offline training, which may be referred to as offline training herein. During use of the NN model by the network device or the terminal device, with further measurement and/or reporting by the terminal device, the network device may continue to collect more data and perform real-time instant online training to optimize parameters of the NN model, so as to achieve better inference and prediction results. After the NN model is obtained, current obtained information may be input into the NN model to infer a corresponding model output.

It should be noted that a model output may be understood as inference or prediction. In the embodiments of the present disclosure, inference and prediction have similar meanings and may be interchanged.

The NN model on the terminal device side may be obtained from the network device side. For example, the network device may construct a dataset by collecting a large amount of data, train the NN model using the dataset, and then distribute the NN model to the terminal device through NN model delivery. Such a network device may be referred to as a network operator or a network equipment vendor. It should be understood that a chip vendor may also set up an Over The Top (OTT) server, and the terminal device may log in to the OTT server through an Internet link to download a suitable NN model.

In related art, after link quality of a spatial filter and/or a cell where a terminal device currently dwells degrades to a certain extent, the terminal device may trigger measurement of candidate cells and/or candidate spatial filters, so as to obtain link quality of the candidate cells and/or candidate spatial filters. The terminal device may report the link quality of the candidate cells and/or candidate spatial filters to a network device, so that the network device may instruct the terminal device to switch the currently dwelling cell and/or spatial filter based on the link quality. However, such cell switch and/or spatial filter switch often suffers from time instant lag, causing the terminal device to dwell a cell and/or spatial filter with poor link quality for a long time instant, thereby resulting in degraded link performance and increasing a risk of radio link failure of the terminal device.

Based on this, an embodiment of the present disclosure provides a communication method. A terminal device may obtain first link quality, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period. In this way, the terminal device may perform cell switch and/or spatial filter switch in a timely manner based on the prediction result determined from the first link quality, so that the terminal device can directly switch from a cell and/or spatial filter with good link quality to another cell and/or spatial filter with good link quality, without experiencing performance degradation caused by untimely cell switch and/or spatial filter switch, thereby reducing the risk of radio link failure.

To facilitate understanding of the technical solutions of the embodiments of the present disclosure, the technical solutions of the present disclosure are described in detail below through specific embodiments. The above related technologies may be optionally combined with the technical solutions of the embodiments of the present disclosure, all of which fall within the protection scope of the embodiments of the present disclosure. The embodiments of the present disclosure include at least part of the following content.

FIG. 5 is a schematic flowchart of a communication method provided by an embodiment of the present disclosure. As shown in FIG. 5, the method may include the following operations.

In S510, a terminal device obtains first link quality, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

It should be noted that in the embodiments of the present disclosure, the link quality may be Layer 1(L1)-RSRP, L1-SINR, L1-RSSI, L1-RSRQ, CQI, or the like, which is not limited in the embodiments of the present disclosure.

Exemplarily, the first time period may be a historical time period.

Exemplarily, the first cell may be a candidate cell, and the first spatial filter may be a candidate spatial filter.

It should be noted that the first spatial filter may be a spatial filter of the first cell, or a spatial filter of another cell other than the first cell, which is not limited in the embodiments of the present disclosure.

It should also be noted that the first link quality is link quality of the first cell and/or the first spatial filter within the first time period, which may be understood as the first link quality is link quality obtained after the terminal device measures the first cell and/or the first spatial filter within the first time period.

It should also be noted that measurement of the first cell by the terminal device within the first time period may be understood as measurement of a spatial filter of the first cell by the terminal device within the first time period.

Further, in a case where the number of spatial filters of the first cell is multiple, the operation of obtaining the first link quality by measuring the first cell by the terminal device within the first time period may be understood as performing linear averaging on multiple obtained link qualities after the terminal device measures the multiple spatial filters within the first time period, so as to obtain the first link quality.

Exemplarily, the first link quality is link quality obtained after the terminal device measures the first cell and/or the first spatial filter at intervals of a first cycle.

The first cycle is a cycle for the terminal device to measure the first cell and/or the first spatial filter within the first time period.

Exemplarily, the first link quality is link quality obtained after the terminal device measures the first cell and/or the first spatial filter at a first time instant.

The first time instant is a time instant at which the terminal device measures the first cell and/or the first spatial filter within the first time period.

The first time instant may be one time instant or multiple time instants, which is not limited in the embodiments of the present disclosure.

It should be noted that the number of first cells may be one or multiple; the number of first spatial filters may be one or multiple, which is not limited in the embodiments of the present disclosure.

It should also be noted that in a case where the number of first cells is multiple and/or the number of first spatial filters is multiple, the first link quality is link quality of each cell and/or each spatial filter among the multiple cells and/or multiple spatial filters within the first time period. That is, the first link quality is link quality obtained after the terminal device separately measures the multiple cells and/or multiple spatial filters within the first time period.

Exemplarily, in a case where the number of first cells is multiple and/or the number of first spatial filters is multiple, the first link quality is link quality obtained after the terminal device separately measures the multiple cells and/or multiple spatial filters at intervals of the first cycle.

Exemplarily, in a case where the number of first cells is multiple and/or the number of first spatial filters is multiple, the first link quality is link quality obtained after the terminal device separately measures the multiple cells and/or multiple spatial filters at the first time instant.

It should be understood that measurement of the first cell and/or the first spatial filter by the terminal device within the first time period may be understood as measurement of a third signal by the terminal device within the first time period, where the third signal is a reference signal on the first cell and/or the first spatial filter.

Based on this, in some embodiments, the first link quality may be obtained based on measurement of a third signal by the terminal device within the first time period.

The number of the third signal may be one or multiple, which is not limited in the embodiments of the present disclosure.

Exemplarily, the terminal device may measure the third signal at intervals of the first cycle to obtain the first link quality.

Exemplarily, the terminal device may measure the third signal at the first time instant to obtain the first link quality.

It should be noted that the third signal may include a Synchronization Signal and PBCH Block (SSB) and/or a Channel State Information-Reference Signal (CSI-RS).

With this method, the terminal device may measure the third signal within the first time period to obtain the first link quality, so that subsequent cell switch and/or spatial filter switch may be performed in a timely manner based on the prediction result determined from the first link quality, avoiding performance degradation caused by untimely cell switch and/or spatial filter switch, and reducing the risk of radio link failure.

Exemplarily, the second time period may be a time period after the historical time period. For example, the second time period may be a future time period.

It should also be noted that the second spatial filter may be a spatial filter of the second cell, or a spatial filter of another cell other than the second cell, which is not limited in the embodiments of the present disclosure.

In some embodiments, at least part of cells in the second cell are the same as at least part of cells in the first cell; or any cell in the second cell is different from any cell in the first cell.

It should be noted that at least part of cells in the second cell may be one cell in the second cell, multiple cells (not all cells) in the second cell, or all cells in the second cell, which is not limited in the embodiments of the present disclosure.

It should be understood that at least part of cells in the first cell are similar to at least part of cells in the second cell, and details are not described herein again.

Exemplarily, when the first cell includes cells with indices 0, 1, and 2, and the second cell includes cells with indices 1, 3, and 4, both the first cell and the second cell include the cell with index 1.

Exemplarily, when the first cell includes cells with indices 0, 1, and 2, and the second cell includes cells with indices 3, 4, and 5, any cell in the second cell is different from any cell in the first cell.

In some embodiments, at least part of spatial filters of the second spatial filter are the same as at least part of spatial filters of the first spatial filter; or any spatial filter in the second spatial filter is different from any spatial filter in the first spatial filter.

It should be understood that exemplary descriptions of the first spatial filter and the second spatial filter are similar to those of the first cell and the second cell, and details are not described herein again.

It should be noted that the number of the second cell may be one or multiple, and the number of the second spatial filter may be one or multiple, which is not limited in the embodiments of the present disclosure.

It should also be noted that in a case where the number of the second cell is multiple and/or the number of the second spatial filter is multiple, the second time period may be divided into multiple time periods. In this case, the second cell and/or the second spatial filter where the terminal device dwells in the second time period may be understood as one cell and/or one spatial filter where the terminal device dwells in each of the multiple time periods.

In some embodiments, the prediction result may include one or more of the following:
an index of the second cell;
dwelling time of the second cell;
link quality of the second cell within the dwelling time of the second cell;
an index of the second spatial filter;
dwelling time of the second spatial filter; and
link quality of the second spatial filter within the dwelling time of the second spatial filter.

It should be noted that in a case where the number of the second cell is multiple, the index of the second cell may include an index of each cell of the second cell, and the dwelling time of the second cell may include dwelling time of each cell of the second cell; and the link quality of the second cell within the dwelling time of the second cell may include link quality of each cell of the second cell within the dwelling time of the respective cell.

Further, the dwelling time of each cell of the second cell may be understood as occupied time of the second time period when the terminal device dwells in each cell of the second cell.

It should be noted that in a case where the number of the second spatial filter is multiple, the index of the second spatial filter may include an index of each spatial filter of the second spatial filter, and the dwelling time of the second spatial filter may include dwelling time of each spatial filter of the second spatial filter; the link quality of the second spatial filter within the dwelling time of the second spatial filter may include link quality of each spatial filter of the second spatial filter within the dwelling time of the respective spatial filter.

Further, the dwelling time of each spatial filter of the second spatial filter may be understood as occupied time of the second time period when the terminal device dwells in each spatial filter of the second spatial filter.

It should be noted that for downlink transmission, the second spatial filter may refer to a downlink transmit spatial filter and/or a downlink receive spatial filter; and for uplink transmission, the second spatial filter may refer to an uplink transmit spatial filter and/or an uplink receive spatial filter.

It should also be noted that in a case where uplink transmission and downlink transmission have spatial filter symmetry, for at least part of filters of the second spatial filter, dwelling time of the downlink spatial filter and the uplink spatial filter are consistent; in a case where uplink transmission and downlink transmission do not have spatial filter symmetry, for at least part of filters of the second spatial filter, dwelling time of the downlink spatial filter and the uplink spatial filter may be inconsistent.

With this method, in a case where the prediction result includes the dwelling time of the second cell and/or the dwelling time of the second spatial filter, the number of predictions by the terminal device for a future dwelling cell and/or spatial filter can be reduced.

An embodiment of the present disclosure provides a communication method. A terminal device may obtain first link quality, where the first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period. In this way, the terminal device may perform cell switch and/or spatial filter switch in a timely manner based on the prediction result determined from the first link quality, so that the terminal device can directly switch from a cell and/or spatial filter with good link quality to another cell and/or spatial filter with good link quality, without experiencing performance degradation caused by untimely cell switch and/or spatial filter switch, thereby reducing the risk of radio link failure.

Based on S510, after obtaining the first link quality, the terminal device may determine a prediction result based on the first link quality; or the terminal device may send the first link quality to a network device to determine a prediction result by the network device.

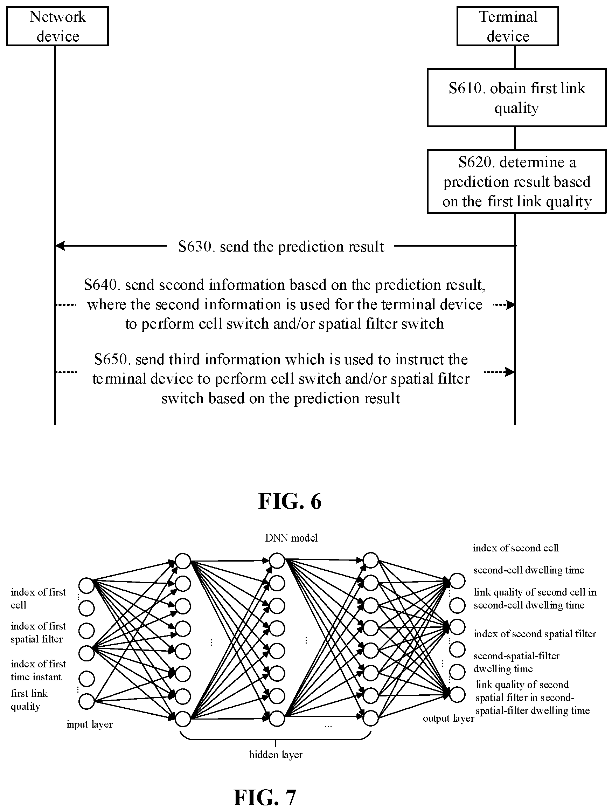

Detailed flows of cell switch and/or spatial filter switch performed by the terminal device based on two manners of determining a prediction result are described below with reference to FIG. 6 to FIG. 11.

FIG. 6 is a first detailed schematic flowchart of a communication method provided by an embodiment of the present disclosure. As shown in FIG. 6, the method may include the following operations.

In S610, a terminal device obtains first link quality.

The first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

In S620, the terminal device determines the prediction result based on the first link quality.

The terminal device may determine the prediction result in the following possible implementations.

In a possible implementation, the terminal device may determine a mapping relationship between link quality of a cell and/or a spatial filter within the first time period and a preset prediction result; and the terminal device may determine the prediction result based on the first link quality and the mapping relationship.

It should be noted that the mapping relationship may be predefined or set in other manners, which is not limited in the embodiments of the present disclosure.

With this method, the terminal device may determine the prediction result based on the first link quality and the mapping relationship, so that subsequent cell switch and/or spatial filter switch may be performed in a timely manner based on the prediction result, avoiding performance degradation caused by untimely cell switch and/or spatial filter switch, and reducing the risk of radio link failure.

In another possible implementation, the operation of determining, by the terminal device, the prediction result based on the first link quality may include: the terminal device inputs the first link quality into a first model to determine the prediction result.

Exemplarily, the first model may be a trained model.

Exemplarily, the first model may be a DNN model, an LSTM model, or another model, which is not limited in the embodiments of the present disclosure.

It should be noted that the operation of the terminal device inputting the first link quality into the first model may be understood as that the terminal device inputs the first link quality into the first model according to a fixed sorting manner of input positions of the first model.

Exemplarily, the terminal device may input the first link quality into the first model in an ascending order of an index of each time instant of the first time instant.

Exemplarily, the terminal device may input the first link quality into the first model in an ascending order of an index of each cell of the first cell and/or an index of each spatial filter of the first spatial filter.

With this method, the terminal device may input the first link quality into the first model to determine the prediction result, so that subsequent cell switch and/or spatial filter switch may be performed in a timely manner based on the prediction result, avoiding performance degradation caused by untimely cell switch and/or spatial filter switch, and reducing the risk of radio link failure.

In another possible implementation, the operation of determining, by the terminal device, the prediction result based on the first link quality may include: the terminal device inputs the first link quality and first information into a first model to determine the prediction result, where the first information may include one or more of the following:
an index of the first cell;
an index of the first spatial filter;
a first cycle, where the first cycle is a cycle for the terminal device to measure the first cell and/or the first spatial filter within the first time period; and
an index of the first time instant, where the first time instant is a time instant at which the terminal device measures the first cell and/or the first spatial filter within the first time period.

Exemplarily, the terminal device may input link quality corresponding to an index of each time instant of the first time instant into the first model (the order is not limited), and the model outputs the prediction result.

Exemplarily, the terminal device may input link quality corresponding to an index of each cell of the first cell and/or an index of each spatial filter of the first spatial filter into the first model (order is not limited), and the model outputs the prediction result.

FIG. 7 is a first schematic diagram of determining a prediction result provided by an embodiment of the present disclosure. As shown in FIG. 7, taking the first model as a DNN model for example, the DNN model may include an input layer, a hidden layer, and an output layer. The terminal device may input an index of the first cell, an index of the first spatial filter, the first cycle, an index of the first time instant, and the first link quality into the DNN model, and the model outputs an index of the second cell, dwelling time of the second cell, link quality of the second cell within the dwelling time of the second cell, an index of the second spatial filter, dwelling time of the second spatial filter, and link quality of the second spatial filter within the dwelling time of the second spatial filter.

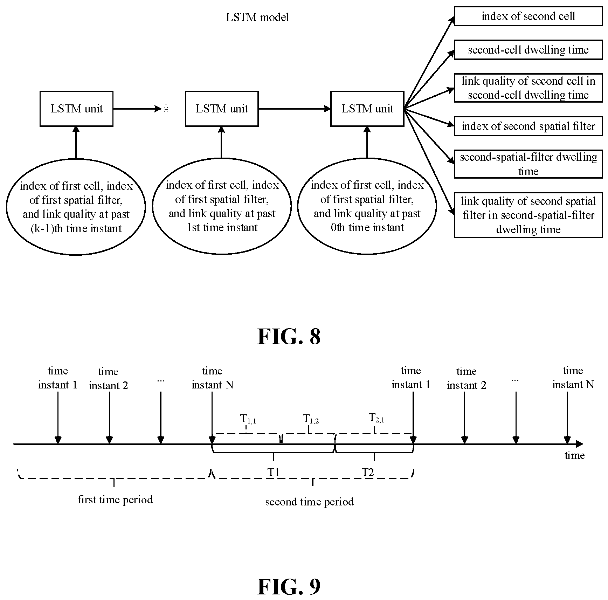

FIG. 8 is a second schematic diagram of determining a prediction result provided by an embodiment of the present disclosure. As shown in FIG. 8, taking the first model as an LSTM model for example, the LSTM model may be considered to be extended by K time instants in time sequence as inputs, which is equivalent to a cascade of K LSTM units, where each LSTM unit corresponds to an index of the first cell, an index of the first spatial filter, and link quality at a past time instant.

It should be noted that the terminal device may input an index of the first cell, an index of the first spatial filter, and corresponding link quality at each time instant from a 0th time instant to a (K-1)th time instant in the past into the LSTM model, and the model outputs an index of the second cell, dwelling time of the second cell, link quality of the second cell within the dwelling time of the second cell, an index of the second spatial filter, dwelling time of the second spatial filter, and link quality of the second spatial filter within the dwelling time of the second spatial filter.

With this method, the terminal device may input the first link quality and the first information into the first model to determine the prediction result, so that subsequent cell switch and/or spatial filter switch may be performed in a timely manner based on the prediction result, avoiding performance degradation caused by untimely cell switch and/or spatial filter switch, and reducing the risk of radio link failure.

Exemplarily, as shown in FIG. 9, the terminal device may measure the first cell and/or the first spatial filter at time instant 1, time instant 2, ..., time instant N (N is a positive integer) within the first time period respectively to obtain the first link quality, and obtain, based on the first link quality, an index of the second cell (such as cell 1 and cell 2) where the terminal device is to dwell within the second time period, dwelling time of the second cell (such as dwelling time T1 in cell 1 and dwelling time T2 in cell 2), link quality of the second cell within the dwelling time of the second cell, an index of the second spatial filter (such as spatial filter 1 and spatial filter 2 of cell 1, spatial filter 3 of cell 2), dwelling time of the second spatial filter (such as dwelling time T1,1 in spatial filter 1, dwelling time T1,2 in spatial filter 2, and dwelling time T2,1 in spatial filter 3), and link quality of the second spatial filter within the dwelling time of the second spatial filter.

It should be noted that the second cell and/or the second spatial filter where the terminal device dwells within the second time period may be a best cell and/or spatial filter, a cell and/or spatial filter ranked second, ..., or a cell and/or spatial filter ranked D-th, which is not limited in the embodiments of the present disclosure.

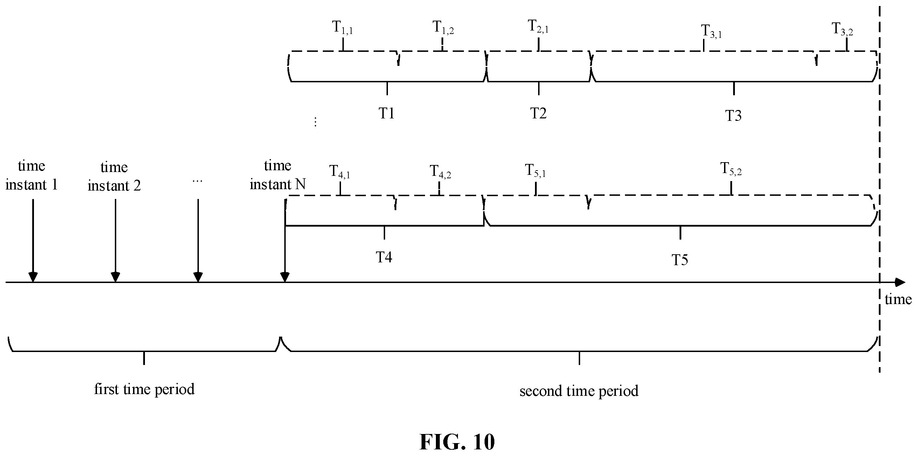

Exemplarily, as shown in FIG. 10, the terminal device may measure the first cell and/or the first spatial filter at time instant 1, time instant 2, ..., time instant N within the first time period respectively to obtain the first link quality, and obtain, based on the first link quality, an index of the second cell (such as best cell 1, cell 2, and cell 3; or cell 4 and cell 5 ranked D-th) where the terminal device is to dwell within the second time period, dwelling time of the second cell (such as dwelling time T1 in cell 1, dwelling time T2 in cell 2, and dwelling time T3 in cell 3; or dwelling time T4 in cell 4 and dwelling time T5 in cell 5), link quality of the second cell within the dwelling time of the second cell, an index of the second spatial filter (such as spatial filter 1 and spatial filter 2 of cell 1, spatial filter 3 of cell 2, spatial filter 4 and spatial filter 5 of cell 3; or spatial filter 6 and spatial filter 7 of cell 4, spatial filter 8 and spatial filter 9 of cell 5), dwelling time of the second spatial filter (such as dwelling time T1,1 in spatial filter 1, dwelling time T1,2 in spatial filter 2, dwelling time T2,1 in spatial filter 3, dwelling time T3,1 in spatial filter 4, dwelling time T3,2 in spatial filter 5; or dwelling time T4,1 in spatial filter 6, dwelling time T4,2 in spatial filter 7, dwelling time T5,1 in spatial filter 8, dwelling time T5,2 in spatial filter 9), and link quality of the second spatial filter within the dwelling time of the second spatial filter.

In some embodiments, in a case where accuracy of the first model is less than a first threshold and/or confidence of the first model is less than a second threshold, the terminal device does not use the first model to obtain the prediction result.

It should be noted that the first threshold may be a predefined parameter value or a parameter value that is set in other manners, which is not limited in the embodiments of the present disclosure.

It should also be noted that the second threshold may be a predefined parameter value or a parameter value that is set in other manners, which is not limited in the embodiments of the present disclosure.

It should be understood that, in a case where accuracy of the first model is less than the first threshold and/or confidence of the first model is less than the second threshold, the terminal device does not use the first model to obtain the prediction result, which may be understood as that the terminal device suspends or disables a prediction function of the first model and falls back to a measurement-based mobility scheme. That is, in a case where accuracy of the first model is less than the first threshold and/or confidence of the first model is less than the second threshold, after link quality of a currently dwelling cell and/or spatial filter degrades to a certain extent, the terminal device triggers measurement of candidate cells and/or candidate spatial filters, and reports measured link quality of the candidate cells and/or candidate spatial filters to the network device, so that the network device can instruct the terminal device to switch the currently dwelling cell and/or spatial filter based on the link quality.

With this method, in a case where accuracy of the first model is less than the first threshold and/or confidence of the first model is less than the second threshold, the prediction function of the first model can be suspended or disabled, and a fallback to a measurement-based mobility scheme is performed, thereby ensuring accuracy of cell switch and/or spatial filter switch performed by the terminal device.

In some embodiments, the network device may send fourth information to the terminal device, where the fourth information is carried by Radio Resource Control (RRC) signaling and/or MAC CE signaling, and the fourth information is used to indicate disabling or suspending the first model; and the terminal device does not use the first model to obtain the prediction result based on the fourth information.

Correspondingly, the terminal device may receive the fourth information from the network device.

With this method, in a case where the fourth information is used to indicate disabling or suspending the first model, the prediction function of the first model can be disabled or suspended, and a fallback to a measurement-based mobility scheme is performed, thereby ensuring accuracy of cell switch and/or spatial filter switch performed by the terminal device.

In S630, the terminal device sends the prediction result to the network device.

Correspondingly, the network device may receive the prediction result from the terminal device.

The terminal device may periodically or semi-persistently report (i.e., send) the prediction result to the network device according to a reporting period and an offset configured by the network device; or the terminal device may aperiodically report the prediction result to the network device.

It should be noted that for semi-persistent reporting, the terminal device needs to report the prediction result to the network device after receiving an activation instruction indicated by the network device.

It should also be noted that for aperiodic reporting, the network device may send Downlink Control Information (DCI) signaling to the terminal device, thereby triggering the terminal device to report the prediction result.

The terminal device may report the prediction result to the network device in the following two manners.

In a possible implementation, the terminal device may report, to the network device, an index of the second cell, dwelling time of the second cell, link quality of the second cell within the dwelling time of the second cell, an index of the second spatial filter, dwelling time of the second spatial filter, and link quality of the second spatial filter within the dwelling time of the second spatial filter.

Exemplarily, the index of the second cell may be a physical cell identifier (PCI), a candidate cell index, or a cell index configured by the network device for the terminal device to dwell within the second time period.

Exemplarily, the index of the second spatial filter may be a resource index in an NR system, such as an SSB Resource Index (SSBRI) and/or a CSI-RS Resource Index (CRI).

Taking link quality as RSRP for example, Table 1 shows a reporting format for reporting the prediction result by the terminal device to the network device.

**Table 1**

| CSI Report ID | CSI Fields |
|---|---|
| CSI Report | PCI#1, if reported |
| | PCI#2, if reported |
| | ... |
| | PCI#P, if reported |
| | Cell-level dwelling time#1, if reported |
| | Cell-level dwelling time#2, if reported |
| | ... |
| | Cell-level dwelling time#P, if reported |
| | Cell-levelRSRP#1, if reported |
| | Cell-levelRSRP#2, if reported |
| | ... |
| | Cell-level RSRP#P, if reported |
| | ... |
| | Beam-level dwelling time #K*P, if reported |
| | Beam-level RSRP#1, if reported |
| | Beam-level Differential RSRP#2, if reported |
| | ... |
| | Beam-level Differential RSRP#K*P, if reported |

As shown in Table 1, PCI #1, PCI #2, ..., PCI #P may represent indices of the second cells; cell-level dwelling time #1, cell-level dwelling time #2, ..., cell-level dwelling time #P may represent dwelling time of the second cells; cell-level RSRP #1, cell-level RSRP #2, ..., cell-level RSRP #P may represent link quality of the second cells within the dwelling time of the second cells; CRI and/or SSBRI #1, CRI and/or SSBRI #2, ..., CRI and/or SSBRI #KP may represent indices of the second spatial filters; beam-level dwelling time #1, beam-level dwelling time #2, ..., beam-level dwelling time #KP may represent dwelling time of the second spatial filters; and beam-level RSRP #1, beam-level differential RSRP #2, ..., beam-level differential RSRP #K*P may represent link quality of the second spatial filters within the dwelling time of the second spatial filters; where P represents the number of the second cells; K represents the number of spatial filters in each of the second cells. The value of K may be different in each of the second cells.

With this method, the network device may obtain the dwelling time of the second cells and the dwelling time of the second spatial filters. Based on the dwelling time of the second cells and the dwelling time of the second spatial filters, the network device may obtain best service time of the second cells and the second spatial filters, so that the network device may configure the terminal device to switch to the second cells and/or the second spatial filters in advance, reducing delay of cell switch and/or spatial filter switch.

In another possible implementation, the terminal device may report, to the network device, link quality of the second cells within the dwelling time of the second cells, indices of the second spatial filters, dwelling time of the second spatial filters, and link quality of the second spatial filters within the dwelling time of the second spatial filters.

Exemplarily, the index of the second cell may be a PCI, a candidate cell index, or a cell index configured by the network device for the terminal device to dwell within the second time period.

Exemplarily, the index of the second spatial filter may be a resource index in an NR system, such as CRI and/or SSBRI.

Exemplarily, in a case where the network device configures an SSB resource and/or CSI-RS resource of the second cell into a dedicated resource pool (or resource set) for multi-cell mobility, the SSBRI and/or CRI may represent not only the SSB resource and/or CSI-RS resource themselves, but also that the SSB resource and/or CSI-RS resource are/is from the second cell. Therefore, the terminal device may not need to report the index of the second cell and the dwelling time of the second cell, but report the SSBRI and/or CRI (i.e., index of the second spatial filter) to enable the network device to infer the index of the second cell corresponding to the second spatial filter according to the CRI and/or SSBRI, and infer the dwelling time of the second cell according to the dwelling time of the second spatial filter.

Taking link quality as RSRP for example, Table 2 shows another reporting format for reporting the prediction result by the terminal device to the network device.

**Table 2**

| CSI Report ID | CSI Fields |
|---|---|
| CSI Report | CRI and/or SSBRI#1, if reported |
| | CRI and/or SSBRI#2, if reported |
| | ... |
| | CRI and/or SSBRI#K*P, if reported |
| | ... |
| | Beam-level dwelling time #1, if reported |
| | Beam-level dwelling time #2, if reported |
| | ... |
| | Beam-level dwelling time #K*P, if reported |
| | Cell-level RSRP#1, if reported |
| | Cell-level RSRP#2, if reported |
| | ... |
| | Cell-level RSRP#P, if reported |
| | Beam-level RSRP#1, if reported |
| | Beam-level differential RSRP#2, if reported |
| | ... |
| | Beam-level differential RSRP#K*P, if reported |

As shown in Table 2, CRI and/or SSBRI #1, CRI and/or SSBRI #2, ..., CRI and/or SSBRI #KP may represent indices of the second spatial filters; beam-level dwelling time #1, beam-level dwelling time #2, ..., beam-level dwelling time #KP may represent dwelling time of the second spatial filters; cell-level RSRP #1, cell-level RSRP #2, ..., cell-level RSRP #P may represent link quality of the second cells within the dwelling time of the second cells; and beam-level RSRP #1, beam-level differential RSRP #2, ..., beam-level differential RSRP #K*P may represent link quality of the second spatial filters within the dwelling time of the second spatial filters.

The terminal device does not report the index of the second cell and the dwelling time of the second cell, and the network device may infer the index of the second cell corresponding to the second spatial filter according to the CRI and/or SSBRI (e.g., CRI and/or SSBRI #1), and infer the dwelling time of the second cell according to the beam-level dwelling time (e.g., beam-level dwelling time #1).

With this method, the network device may obtain the dwelling time of the second cell and the dwelling time of the second spatial filter. Based on the dwelling time of the second cell and the dwelling time of the second spatial filter, the network device may obtain best service time of the second cell and the second spatial filter, so that the network device may configure the terminal device to switch to the second cell and/or the second spatial filter in advance, reducing delay of cell switch and/or spatial filter switch.

It should be noted that, in a case where the second spatial filter is a downlink transmit spatial filter, the index of the second spatial filter may be represented by an SSBRI and/or CRI; in a case where the second spatial filter is a downlink transmit and receive spatial filter, the index of the second spatial filter may be represented by a Beam (pair).

Based on S630, after receiving the prediction result from the terminal device, the network device may directly instruct the terminal device to perform cell switch and/or spatial filter switch, i.e., perform S640; or instruct the terminal device to perform cell switch and/or spatial filter switch by itself based on the prediction result, i.e., perform S650.

In S640, the network device sends second information to the terminal device based on the prediction result, where the second information is used for the terminal device to perform cell switch and/or spatial filter switch.

Correspondingly, the terminal device may receive the second information from the network device, where the second information is obtained based on the prediction result.

The second information may be used to indicate one or more of the following:
an index of a third cell;
dwelling time of the third cell;
an index of a third spatial filter; and
dwelling time of the third spatial filter,
where the third cell is one or more of the second cells, and the third spatial filter is one or more of the second spatial filters.

In some embodiments, the second information may be carried by MAC CE signaling or DCI signaling.

Exemplarily, the dwelling time of the third cell and/or the dwelling time of the third spatial filter may be carried by MAC CE signaling. When the network device preconfigures a minimum unit of dwelling time (i.e., minimum dwelling time) via RRC signaling, the MAC CE may indicate that the third cell or the third spatial filter dwells for N minimum dwelling time. For example, if the network device configures the minimum unit of dwelling time as 5 ms, the dwelling time of the third cell or the third spatial filter may be obtained as 5*N ms according to the N minimum dwelling time ofdicated by the MAC CE.

Exemplarily, the dwelling time of the third cell and/or the dwelling time of the third spatial filter may be carried by DCI signaling. For example, the network device may indicate the dwelling time of the third cell and/or the dwelling time of the third spatial filter via DCI format 1_1 or 1_2; as another example, the network device may configure possible dwelling time lengths via RRC signaling, such as {5 ms, 10 ms, 15 ms, 50 ms}, corresponding to code points {00}, {01}, {10}, and {11} of a 2-bit field in the DCI signaling respectively.

In some embodiments, the terminal device may perform cell switch and/or spatial filter switch based on the second information.

It should be noted that, after the dwelling time of the currently dwelling cell expires, the terminal device may automatically switch to a next indicated best dwelling cell and dwell for a corresponding duration based on the second information indicated by the network device; and/or, after the dwelling time of the currently dwelling spatial filter expires, the terminal device may automatically switch to a next indicated best dwelling spatial filter and dwell for a corresponding duration based on the second information indicated by the network device.

With this method, in a case where the second information is used to indicate the dwelling time of the third cell and/or the dwelling time of the third spatial filter, after the dwelling time of the currently dwelling cell and/or currently dwelling spatial filter expires, the terminal device may automatically switch to a next indicated best dwelling cell and/or best dwelling spatial filter and dwell for a corresponding duration based on the second information indicated by the network device, thereby reducing frequent delivery of cell switch and/or spatial filter switch indication information.

In S650, the network device sends third information to the terminal device, where the third information is used to instruct the terminal device to perform cell switch and/or spatial filter switch based on the prediction result.

Correspondingly, the terminal device may receive the third information from the network device.

It should be noted that the network device has sufficient resources to accommodate uplink and downlink transmission of the terminal device within the dwelling time of the second cell and/or the dwelling time of the second spatial filter.

With this method, the terminal device may perform a cell switch and/or spatial filter switch scheme without direct indication from the network device, i.e., after the dwelling time of the currently dwelling cell and/or currently dwelling spatial filter expires, the terminal device may automatically switch to a next indicated best dwelling cell and/or best dwelling spatial filter and dwells for a corresponding duration based on the prediction result, thereby reducing signaling overhead.

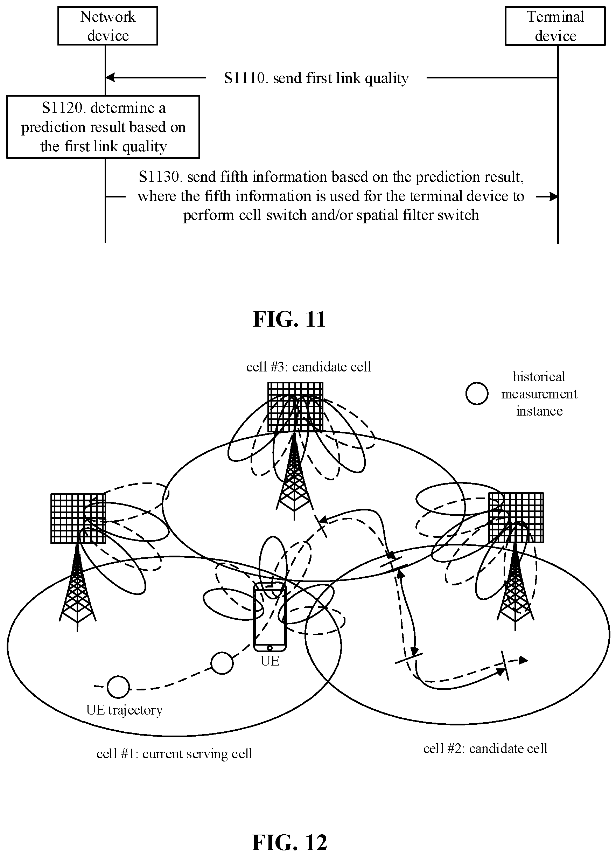

FIG. 11 is a second detailed schematic flowchart of a communication method provided by an embodiment of the present disclosure. As shown in FIG. 11, the method may include the following operations.

In S1110, a terminal device sends first link quality to a network device.

Correspondingly, the network device may receive the first link quality from the terminal device.

The first link quality is link quality of a first cell and/or a first spatial filter within a first time period, the first link quality is used to determine a prediction result, the prediction result is related to a second cell and/or a second spatial filter where the terminal device is to dwell within a second time period, and an end time of the first time period is earlier than a start time of the second time period.

In some embodiments, the terminal device may send first information to the network device, where the first information and the first link quality are used to determine the prediction result, and the first information includes one or more of the following:
an index of the first cell;
an index of the first spatial filter;
a first cycle, where the first cycle is a cycle for the terminal device to measure the first cell and/or the first spatial filter within the first time period; and
an index of a first time instant, where the first time instant is a time instant at which the terminal device measures the first cell and/or the first spatial filter within the first time period.

Table 3 shows a reporting format for reporting the first link quality and the first information by the terminal device to the network device. The terminal device may report one instance of the first link quality and the first information in one reporting instance, that is, the number of the first time instant is one in this case, and the first link quality is link quality of the first cell and/or the first spatial filter at one first time instant.

**Table 3**

| CSI Report ID | CSI Fields |
|---|---|
| CSI Report | PCI#1, if reported |
| | PCI#2, if reported |
| | ... |
| | PCI#Q, if reported |
| | CRI and/or SSBRI#1, if reported |
| | CRI and/or SSBRI#2, if reported |
| | ... |
| | CRI and/or SSBRI#L*Q, if reported |
| | RSRP#1, if reported |
| | differential RSRP#2, if reported |
| | ... |
| | differential RSRP#L*Q, if reported |

As shown in Table 3, PCI #1, PCI #2, ..., PCI #Q may represent indices of the first cells; CRI and/or SSBRI #1, CRI and/or SSBRI #2, ..., CRI and/or SSBRI #LQ may represent indices of the first spatial filters; and RSRP #1, differential RSRP #2, ..., differential RSRP #LQ may represent the first link quality; where Q represents the number of the first cells, and L represents the number of spatial filters in each of the first cells. The value of L may be different in each of the first cells.

With this method, the terminal device may report one instance of the first link quality and the first information in one reporting instance, so that the network device may obtain the first link quality and the first information as soon as possible, and subsequently obtain a prediction result based on the first link quality and the first information as early as possible, thereby instructing the terminal device to perform cell switch and/or spatial filter switch in a timely manner.

Table 4 shows another reporting format for reporting the first link quality and the first information by the terminal device to the network device. The terminal device may report multiple instances of the first link quality and the first information in one reporting instance, that is, the number of the first time instants is multiple in this case, and the first link quality is link quality of the first cell and/or the first spatial filter at the multiple first time instants.

**Table 4**

| CSI Report ID | CSI Fields |
|---|---|
| | PCI#1, if reported |
| | PCI#2, if reported |
| | ... |
| | PCI#R*Q, if reported |
| | CRI and/or SSBRI#1, if reported |
| CSI Report | CRI and/or SSBRI#2, if reported |
| | ... |
| | CRI and/or SSBRI#R*L*Q, if reported |
| | RSRP#1, if reported |
| | differential RSRP#2, if reported |
| | ... |
| | differential RSRP#R*L*Q, if reported |

As shown in Table 4, PCI #1, PCI #2, ..., PCI #RQ may represent indices of the first cells; CRI and/or SSBRI #1, CRI and/or SSBRI #2, ..., CRI and/or SSBRI #RLQ may represent indices of the first spatial filters; and RSRP #1, differential RSRP #2, ..., differential RSRP #RL*Q may represent the first link quality; where R represents the number of the first time instants.

With this method, the terminal device may report multiple instances of the first link quality and the first information in one reporting instance, thereby reducing the number of reports of the terminal device and lowering uplink resource occupation.

In S1120, the network device determines a prediction result based on the first link quality.

The network device may determine the prediction result in the following possible implementations.

In a possible implementation, the network device may determine a mapping relationship between link quality of a cell and/or a spatial filter within the first time period and a preset prediction result; and the network device may determine the prediction result based on the first link quality and the mapping relationship.

It should be noted that the mapping relationship may be predefined or set in other manners, which is not limited in the embodiments of the present disclosure.

With this method, the network device may determine the prediction result based on the first link quality and the mapping relationship, so that the network device may subsequently instruct the terminal device to perform cell switch and/or spatial filter switch in a timely manner based on the prediction result, avoiding performance degradation of the terminal device caused by untimely cell switch and/or spatial filter switch, and reducing the risk of radio link failure.

In another possible implementation, the operation of determining, by the network device, the prediction result based on the first link quality may include: the network device inputs the first link quality into a second model to determine the prediction result.

Exemplarily, the second model may be a trained model.

Exemplarily, the second model may be a DNN model, an LSTM model, or another model, which is not limited in the embodiments of the present disclosure.

It should be noted that the first model and the second model may be the same model or different models, which is not limited in the embodiments of the present disclosure.

It should be noted that the operation of the network device inputting the first link quality into the second model may be understood as that the network device inputs the first link quality into the second model according to a fixed sorting manner of input positions of the second model.

Exemplarily, the network device may input the first link quality into the second model in an ascending order of an index of each time instant of the first time instant, where the first time instant is a time instant at which the terminal device measures the first cell and/or the first spatial filter within the first time period.

Exemplarily, the network device may input the first link quality into the second model in an ascending order of an index of each cell of the first cell and/or an index of each spatial filter of the first spatial filter.

With this method, the network device may input the first link quality into the second model to determine the prediction result, so that the network device may subsequently instruct the terminal device to perform cell switch and/or spatial filter switch in a timely manner based on the prediction result, avoiding performance degradation of the terminal device caused by untimely cell switch and/or spatial filter switch, and reducing the risk of radio link failure.

In another possible implementation, the operation of determining, by the network device, the prediction result based on the first link quality may include: the network device inputs the first link quality and first information into a second model to determine the prediction result, where the first information may include one or more of the following:
an index of the first cell;
an index of the first spatial filter;
a first cycle, where the first cycle is a cycle for the network device to measure the first cell and/or the first spatial filter within the first time period; and
an index of the first time instant, where the first time instant is a time instant at which the network device measures the first cell and/or the first spatial filter within the first time period.

In some embodiments, the first information may be sent by the terminal device.

Exemplarily, the network device may input link quality corresponding to an index of each time instant of the first time instant into the second model (order is not limited), and the model outputs the prediction result.

Exemplarily, the network device may input link quality corresponding to an index of each cell of the first cell and/or an index of each spatial filter of the first spatial filter into the second model (order is not limited), and the model outputs the prediction result.

With this method, the network device may input the first link quality and the first information into the second model to determine the prediction result, so that the network device may subsequently instruct the terminal device to perform cell switch and/or spatial filter switch in a timely manner based on the prediction result, avoiding performance degradation of the terminal device caused by untimely cell switch and/or spatial filter switch, and reducing the risk of radio link failure.

In some embodiments, in a case where accuracy of the second model is less than a third threshold and/or confidence of the second model is less than a fourth threshold, the network device does not use the second model to obtain the prediction result.

It should be noted that the third threshold may be a predefined parameter value or a parameter value that is set in other manners, which is not limited in the embodiments of the present disclosure.

It should also be noted that the fourth threshold may be a predefined parameter value or a parameter value that is set in other manners, which is not limited in the embodiments of the present disclosure.

It should be understood that, in a case where accuracy of the second model is less than the third threshold and/or confidence of the second model is less than the fourth threshold, the network device does not use the second model to obtain the prediction result, which may be understood as that the network device suspends or disables a prediction function of the second model and falls back to a measurement-based mobility scheme. That is, in a case where accuracy of the second model is less than the third threshold and/or confidence of the second model is less than the fourth threshold, after link quality of a currently dwelling cell and/or spatial filter degrades to a certain extent, the terminal device may trigger measurement of candidate cells and/or candidate spatial filters, and report measured link quality of the candidate cells and/or candidate spatial filters to the network device, so that the network device may instruct the terminal device to switch the currently dwelling cell and/or spatial filter based on the link quality.

With this method, in a case where accuracy of the second model is less than the third threshold and/or confidence of the second model is less than the fourth threshold, the prediction function of the second model can be suspended or disabled, and a fallback to a measurement-based mobility scheme is performed, thereby ensuring accuracy of cell switch and/or spatial filter switch performed by the terminal device.

In S1130, the network device sends fifth information to the terminal device based on the prediction result, where the fifth information is used for the terminal device to perform cell switch and/or spatial filter switch.

Correspondingly, the terminal device may receive the fifth information from the network device.

The fifth information may be used to indicate one or more of the following:
an index of a fourth cell;
dwelling time of the fourth cell;
an index of a fourth spatial filter; and
dwelling time of the fourth spatial filter,
where the fourth cell is one or more of the second cells, and the fourth spatial filter is one or more of the second spatial filters.

It should be noted that since the fifth information is sent by the network device based on the prediction result, and the prediction result is determined by the network device based on the first link quality, the fifth information is related to the first link quality.

It should also be noted that at least part of cells in the fourth cell are the same as at least part of cells in the third cell; or any cell in the fourth cell is different from any cell in the third cell.

It should be understood that at least part of cells in the fourth cell may be one cell in the fourth cell, multiple cells (not all cells) in the fourth cell, or all cells in the fourth cell, which is not limited in the embodiments of the present disclosure.

At least part of cells in the third cell are similar to at least part of cells in the fourth cell, and details are not described herein again.

In some embodiments, the fifth information may be carried by MAC CE signaling or DCI signaling.

It should be noted that exemplary descriptions of the fifth information carried by MAC CE signaling or DCI signaling are similar to those of the second information, and details are not described herein again.

In some embodiments, the terminal device may perform cell switch and/or spatial filter switch based on the fifth information.

It should be noted that, after the dwelling time of the currently dwelling cell expires, the terminal device may automatically switch to a next indicated best dwelling cell and dwell for a corresponding duration based on the fifth information indicated by the network device; and/or, after the dwelling time of the currently dwelling spatial filter expires, the terminal device may automatically switch to a next indicated best dwelling spatial filter and dwell for a corresponding duration based on the fifth information indicated by the network device.

With this method, in a case where the fifth information is used to indicate the dwelling time of the fourth cell and/or the dwelling time of the fourth spatial filter, after the dwelling time of the currently dwelling cell and/or currently dwelling spatial filter expires, the terminal device may automatically switch to a next indicated best dwelling cell and/or best dwelling spatial filter and dwell for a corresponding duration based on the fifth information indicated by the network device, thereby reducing frequent delivery of cell switch and/or spatial filter switch indication information.

Based on FIG. 6 to FIG. 11, the terminal device may perform cell switch and/or spatial filter switch in a timely manner based on the prediction result determined from the first link quality, so that the terminal device can directly switch from a cell and/or spatial filter with good link quality to another cell and/or spatial filter with good link quality, without experiencing performance degradation caused by untimely cell switch and/or spatial filter switch, thereby reducing the risk of radio link failure.

In some embodiments, the terminal device may send capability information of the terminal device to the network device, where the capability information of the terminal device is used to indicate that the terminal device supports obtaining the first link quality, and/or supports determining the prediction result based on the first link quality.

Correspondingly, the network device may receive the capability information of the terminal device.

In some embodiments, the capability information of the terminal device includes one or more of the following:
a maximum number of fifth cells supported by the terminal device, where the fifth cells are cells that the terminal device can measure within the first time period, and the fifth cells include the first cell;
a maximum number of fifth spatial filters supported by the terminal device, where the fifth spatial filters are spatial filters that the terminal device can measure within the first time period, and the fifth spatial filters include the first spatial filter;
a maximum number of first signals supported to be measured by the terminal device, where the first signals are reference signals on the fifth cells and/or fifth spatial filters;
a maximum length of a second cycle supported by the terminal device, where the second cycle is a cycle for the terminal device to measure the fifth cells and/or fifth spatial filters within the first time period;
a maximum number of second time instants supported by the terminal device, where the second time instants are time instants at which the terminal device measures the fifth cells and/or fifth spatial filters within the first time period;
a maximum number of sixth cells supported by the terminal device, where the sixth cells are cells that the terminal device can dwell within the second time period, and the sixth cells include the second cell;
a maximum number of sixth spatial filters supported by the terminal device, where the sixth spatial filters are spatial filters that the terminal device can dwell within the second time period, and the sixth spatial filters ofclude the second spatial filter;
dwelling time of the sixth cells that the terminal device supports obtaining;
dwelling time of the sixth spatial filters that the terminal device supports obtaining;
a maximum length of the dwelling time of the sixth cells that the terminal device supports obtaining.

It should be noted that the fifth cells are cells that the terminal device can measure within the first time period, and the first cell is a cell that the terminal device actually measures within the first time period. That is, the terminal device may actually measure one or more cells among the fifth cells within the first time period, and the one or more cells among the fifth cells are the first cell.

The fifth spatial filters are spatial filters that the terminal device can measure within the first time period, and the first spatial filter is a spatial filter that the terminal device actually measures within the first time period. That is, the terminal device may actually measure one or more spatial filters among the fifth spatial filters within the first time period, and the one or more spatial filters among the fifth spatial filters are the first spatial filter.

Since the first signals are reference signals on the fifth cells and/or fifth spatial filters, and the third signals are reference signals on the first cells and/or first spatial filters, one or more signals among the first signals are the third signals.

Since the second cycle is a cycle for the terminal device to measure the fifth cells and/or fifth spatial filters within the first time period, and the first cycle is a cycle for the terminal device to measure the first cells and/or first spatial filters within the first time period, one or more cycles among the second cycles are the first cycle.

Since the second time instants are time instants at which the terminal device measures the fifth cells and/or fifth spatial filters within the first time period, and the first time instants are time instants at which the terminal device measures the first cells and/or first spatial filters within the first time period, one or more time instants among the second time instants are the first time instant.

The sixth cells are cells where the terminal device can dwell within the second time period, and the second cell is a cell where the terminal device dwells in within the second time period determined based on the first link quality. That is, one or more cells among the sixth cells may be determined based on the first link quality, and the one or more cells among the sixth cells are the second cell.

The sixth spatial filters are spatial filters where the terminal device can dwell within the second time period, and the second spatial filter is a spatial filter where the terminal device dwells in within the second time period determined based on the first link quality. That is, one or more spatial filters among the sixth spatial filters may be determined based on the first link quality, and the one or more spatial filters among the sixth spatial filters are the second spatial filter.

With this method, the terminal device may send the capability information of the terminal device to the network device, so that after receiving the capability information of the terminal device, the network device may configure measurement and/or prediction of the terminal device.

In some embodiments, the network device may send sixth information to the terminal device, where the sixth information includes one or more of the following:
an index of a seventh cell, where the seventh cell is a cell configured by the network device for the terminal device to measure within the first time period, and the seventh cell includes the first cell;
an index of a seventh spatial filter, where the seventh spatial filter is a spatial filter configured by the network device for the terminal device to measure within the first time period, and the seventh spatial filter includes the first spatial filter;
an index of a second signal, where the second signal is a reference signal on the seventh cell and/or seventh spatial filter;
a length of a third cycle, where the third cycle is a cycle for the terminal device to measure the seventh cell and/or seventh spatial filter within the first time period;
an index of a third time instant, where the third time instant is a time instant at which the terminal device measures the seventh cell and/or seventh spatial filter within the first time period;
an index of an eighth cell, where the eighth cell is a cell configured by the network device for the terminal device to dwell within the second time period, and the eighth cell includes the second cell; and
an index of an eighth spatial filter, where the eighth spatial filter is a spatial filter configured by the network device for the terminal device to dwell within the second time period, and the eighth spatial filter includes the second spatial filter.

Correspondingly, the terminal device may receive the sixth information from the network device.

Furthermore, in some embodiments, the sixth information may be related to the capability information of the terminal device.

It should be noted that the seventh cell is a cell configured by the network device for the terminal device to measure within the first time period, and the first cell is a cell that the terminal device actually measures within the first time period. That is, the terminal device may actually measure one or more cells among the seventh cells within the first time period, and the one or more cells among the seventh cells are the first cell. In addition, in a case where the sixth information is related to the capability information of the terminal device, the seventh cell may be one or more of the fifth cells.

The seventh spatial filter is a spatial filter configured by the network device for the terminal device to measure within the first time period, and the first spatial filter is a spatial filter that the terminal device actually measures within the first time period. That is, the terminal device may actually measure one or more spatial filters among the seventh spatial filters within the first time period, and the one or more spatial filters among the seventh spatial filters are the first spatial filter. In addition, in a case where the sixth information is related to the capability information of the terminal device, the seventh spatial filter may be one or more of the fifth spatial filters.

Since the second signal is a reference signal on the seventh cell and/or seventh spatial filter, and the third signal is a reference signal on the first cell and/or first spatial filter, one or more signals among the second signals are the third signals. In addition, in a case where the sixth information is related to the capability information of the terminal device, the second signal may be one or more of the first signals.

Since the third cycle is a cycle for the terminal device to measure the seventh cell and/or seventh spatial filter within the first time period, and the first cycle is a cycle for the terminal device to measure the first cell and/or first spatial filter within the first time period, one or more periods among the third cycles are the first cycle. In addition, in a case where the sixth information is related to the capability information of the terminal device, the third cycle may be one or more of the second cycles.

Since the third time instant is a time instant at which the terminal device measures the seventh cell and/or seventh spatial filter within the first time period, and the first time instant is a time instant at which the terminal device measures the first cell and/or first spatial filter within the first time period, one or more time instants among the third time instants are the first time instant. In addition, in a case where the sixth information is related to the capability information of the terminal device, the third time instant may be one or more of the second time instants.

The eighth cell is a cell configured by the network device for the terminal device to dwell within the second time period, and the second cell is a cell where the terminal device dwells in within the second time period determined based on the first link quality. That is, one or more cells among the eighth cells may be determined based on the first link quality, and the one or more cells among the eighth cells are the second cell. In addition, in a case where the sixth information is related to the capability information of the terminal device, the eighth cell may be one or more of the sixth cells.

The eighth spatial filter is a spatial filter configured by the network device for the terminal device to dwell within the second time period, and the second spatial filter is a spatial filter where the terminal device dwells in within the second time period determined based on the first link quality. That is, one or more spatial filters among the eighth spatial filters may be determined based on the first link quality, and the one or more spatial filters among the eighth spatial filters are the second spatial filter. In addition, in a case where the sixth information is related to the capability information of the terminal device, the eighth spatial filter may be one or more of the sixth spatial filters.

With this method, the network device may send the sixth information to the terminal device, so as to configure measurement and/or prediction of the terminal device.

Embodiments of the present disclosure provide a communication method. A terminal device may perform cell switch and/or spatial filter switch in a timely manner based on a prediction result determined based on first link quality, so that the terminal device can directly switch from a cell and/or spatial filter with good link quality to another cell and/or spatial filter with good link quality, without experiencing performance degradation caused by untimely cell switch and/or spatial filter switch, thereby reducing the risk of radio link failure.

The communication method provided by the embodiments of the present disclosure is described in detail below with reference to specific application scenarios.

For ease of description, "beam (pair)" is used to represent "spatial filter" in the following embodiments. In other words, in some scenarios, "beam (pair)" and "spatial filter" in the following text may be replaced with each other.

A measurement set Set Bm,n and a prediction set Set Ac are mentioned multiple times in the following embodiments. It should be understood that Set Bm,n refers to candidate cells (i.e., seventh cells) configured by the NW for a UE to measure within the first time period based on the capability information of the UE, and historical time instants (i.e., third time instants) at which the UE measures the candidate cells within the first time period, where M in 1<=m<=M is the number of candidate cells configured by the NW for the UE to measure, and N in 1<=n<=N is the number of historical time instants. Set Ac refers to candidate cells (i.e., eighth cells) configured by the NW for the UE to dwell within the second time period based on the capability information of the UE, where C in 1<=c<=C is the number of candidate cells configured by the NW for the UE to dwell.

In the related art, after link quality of a cell and/or beam where a UE currently dwells degrades to a certain extent, switch of the cell and/or beam is triggered, which often has time lag; however, the technical solution provided by the embodiments of the present disclosure may predict link quality of multiple future candidate cells (e.g., second cells) and/or multiple beams (e.g., second spatial filters) based on historical link quality (i.e., first link quality), so as to select a best cell and/or beam, which has strong foresight, thus also reducing delay of cell switch and/or beam switch and lowering the risk of radio link failure of the UE. The UE is enabled to directly switch from a cell and/or beam with good link quality to another cell and/or beam with good link quality, without experiencing performance degradation and link interruption caused by untimely cell switch and/or beam switch.

Embodiments of the present disclosure provide an AI/ML model-based time-domain mobility prediction scheme.

In a case where an AI/ML model (i.e., first model) is deployed on a UE side, the UE may measure a measurement set Set Bm,n of M candidate cells (including a current serving cell) at N historical time instants as input of the AI/ML model. Within a certain time window, the model predicts Top-D (top D) best candidate cells (i.e., second cells), dwelling time, and cell-level link quality. For any cell in the Top-D candidate cells, the model predicts Top-E (top E) best beams (pairs) (i.e., second spatial filters), dwelling time, and link quality corresponding to the beams (pairs). Subsequently, the UE may use the prediction result of the AI/ML model in two manners. First, the UE may report the prediction result to the NW and wait for a cell switch command (i.e., second information) from the NW; and second, the UE may report the prediction result to the NW and perform cell switch and/or beam switch by itself based on an instruction (i.e., third information) from the NW.

In a case where an AI/ML model (i.e., second model) is deployed on the NW side, the UE may measure a measurement set Set Bm,n of m candidate cells (including a current serving cell) at n historical time instants to obtain first link quality, and report the first link quality to the NW, so that the AI/ML model on the NW side can predict cell-level and/or beam-level dwelling time. The NW may send an enhanced L1/L2 Triggered Mobility (LTM) switch (i.e., fifth information) command to instruct the UE to perform cell/beam switch. In addition, prediction based on best candidate cell and/or best beam dwelling time can significantly reduce the number of inferences of the AI/ML model.

A trained AI/ML model may be used in the embodiments of the present disclosure to perform time-domain mobility prediction, aiming to predict a most suitable cell and/or beam (pair) from multiple candidate cells and/or multiple beams (pairs) by using limited historical time-instant measurements, and predict that the cell and/or beam (pair) can last for a period of time with certain link quality.

After prediction performance of the AI/ML model degrades to a certain extent, e.g., prediction accuracy drops below a certain threshold (e.g., a first threshold, or a third threshold), a prediction function of the AI/ML model may be suspended, and a fallback to a measurement-based mobility scheme is performed. In addition to prediction accuracy of the AI/ML model, confidence of the AI/ML model in prediction output may also be considered. When confidence output by the AI/ML model is too low, for example, when confidence of the AI/ML model in predicting a best candidate cell is lower than a certain threshold (e.g., a second threshold, or a fourth threshold), it indicates that the AI/ML model lacks information for prediction, and the prediction result is not worthy of adoption. Similarly, prediction of the AI/ML model may be suspended, so that the UE side or the NW side falls back to a measurement-based mobility mechanism.

RRC signaling or MAC CE signaling may be used for switching between an AI/ML model-based prediction scheme and a measurement-based mobility scheme to turn on or off the AI/ML model. For example, in a case where RRC signaling or MAC CE signaling instructs the AI/ML model to be suspended or turned off, the UE may fall back to the measurement-based mobility scheme; and when RRC signaling or MAC CE signaling instructs the AI/ML model to be resumed or turned on, the UE may use the AI/ML model to perform related prediction.

With reference to procedures and signaling design of the 3rd Generation Partnership Project (3GPP) protocol, the technical solution may be described in two embodiments: the AI/ML model is deployed on the UE side and the AI/ML model is deployed on the NW side.

### Embodiment 1: the AI/ML model is deployed on the UE side.

FIG. 12 is a schematic diagram of a scenario for predicting a best candidate cell and/or best beam according to an embodiment of the present disclosure. Assume that a UE moves among multiple cells (i.e., cell #1, cell #2, and cell #3) at a certain speed, and a trajectory of the UE movement is shown by a dashed line. The UE measures downlink reference signals (e.g., CSI-RS or SSB) in historical measurement instances. The AI/ML model may predict a best cell within a future time window, a best uplink/downlink beam (pair) corresponding to the best cell, dwelling time, link quality corresponding to the best cell, and link quality corresponding to the best uplink/downlink beam (pair), such as L1-RSRP.

As shown in FIG. 12, the UE measures a measurement set Set Bm,n at two time instants (time instant 1 and time instant 2) in cell #1 (i.e., current serving cell), where M=3 in 1<=m<=3 represents three candidate cells (including cell #1), and N=2 in 1<=n<=2 represents two time instants; after the UE moves to cell #2 and cell #3, a best candidate cell (including cell-level dwelling time) and a best beam (including beam-level dwelling time) may be selected from a prediction set Set Ac (where 1<=c<=3). Reference signals actually measured by the UE are represented by solid-line ellipses, and reference signals not measured but included in the prediction set Set Ac are represented by dashed-line ellipses.

For a time sequence relationship between a measurement window (i.e., first time period) and a prediction window (i.e., second time period), reference may be made to FIG. 9. In FIG. 9, a UE measures downlink reference signals sent at N historical time instants for M candidate cells in the measurement set Set Bm,n within the measurement window. The model predicts a Top-D (D=1) best cell, its dwelling time (Cell Dwelling Time), e.g., T1 and T2, and cell-level link quality. For the predicted best cell, the model predicts a Top-E (E=1) best beam (pair) within the cell, a beam (pair) dwelling time (Beam Dwelling Time), e.g., T1,1, T1,2, T2,1, and beam (pair)-level link quality. It should be noted that Top-D and Top-E here may be extended to cases where D>1 and E>1.

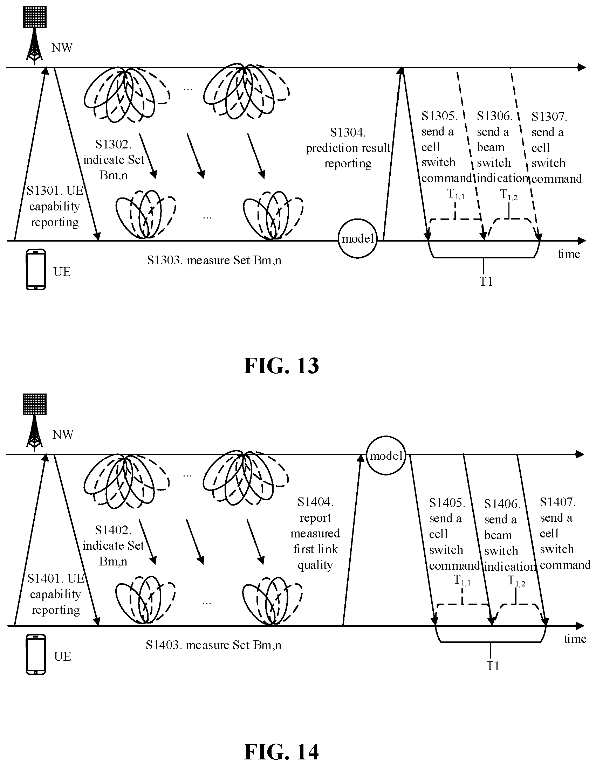

FIG. 13 is a third detailed schematic flowchart of a communication method according to an embodiment of the present disclosure. As shown in FIG. 13, the detailed procedure may include the following operations.

In S1301, a UE reports capability information of the UE to a NW.

The UE reports the capability information of the UE to the NW, where the capability information of the UE is used to indicate that the UE supports obtaining first link quality, and/or supports determining a prediction result based on the first link quality.

Correspondingly, the NW may receive the capability information of the UE.

In S1302, the NW indicates Set Bm,n to the UE.

The NW may indicate Set Bm,n to the UE based on the capability information of the UE.

Correspondingly, the UE may receive Set Bm,n.

Furthermore, the NW may indicate a prediction set Set Ac to the UE based on the capability information of the UE.

In S1303, the UE may measure Set Bm,n.

That is, the UE may measure reference signals on M candidate cells at N historical time instants, so as to obtain first link quality.

Furthermore, the UE may input the first link quality into an AI/ML model to obtain a prediction result.

In S1304, the UE reports the prediction result to the NW.

Correspondingly, the NW may receive the prediction result.

In S1305, the NW sends a cell switch indication to the UE.

The NW may send a cell switch indication (i.e., second information) to the UE based on the prediction result.

In S1306, the NW sends a beam switch indication to the UE.

The NW may send a beam switch indication (i.e., second information) to the UE based on the prediction result.

In S1307, the NW sends a cell switch indication to the UE.

The NW may send a cell switch indication (i.e., second information) to the UE based on the prediction result.

It should be noted that in FIG. 13, the cell switch indication (i.e., S1307) and the beam switch indication (i.e., S1306) identified by dashed lines may be indicated or not, depending on how to use cell-level/beam (pair)-level dwelling time predicted by the model. Exemplarily, when the cell switch indication sent by the NW to the UE in operation S1305 includes dwelling time T1 of a candidate cell and dwelling time T1,1 and T1,2 of two candidate beams of the candidate cell, S1306 and S1307 may be omitted, and the terminal device may perform cell switch and/or beam switch by itself based on S1305.

Before the NW configures a measurement set Set Bm,n and a prediction set Set Ac required by the AI/ML model for the UE, the UE needs to report to the NW through capability information whether it supports obtaining first link quality, and/or whether it supports determining a prediction result based on the first link quality. When such a character is supported, the capability information reported by the UE includes but is not limited to:
(1) whether the AI/ML model on the UE side supports cell-level dwelling time prediction and whether it supports beam (pair)-level dwelling time prediction;
(2) a maximum number of candidate cells (i.e., maximum number of fifth cells) supported to be measured on all downlink Component Carriers (CCs)/Bandwidth Parts (BWPs):
   a maximum number of configurable measurement sets (generally, each measurement set corresponds to one candidate cell); and
   a maximum number of measurement sets measurable simultaneously;
   the number of measurement time instants (i.e., second time instants) measurable as input of the AI/ML model;
(3) a maximum number of candidate cells (i.e., maximum number of sixth cells) supported to be predicted on all downlink CCs/BWPs:
   a maximum number of configurable prediction sets (generally, each prediction set corresponds to one candidate cell); and
   a length of dwelling time window (i.e., maximum length of dwelling time of sixth cells) predictable by the AI/ML model;
(4) a maximum number of candidate cell measurement sets supported on one downlink CC/BWP:
   for each measurement set, a maximum number of measurable downlink SSB resources, and/or CSI-RS resources, and/or CSI-RS for Mobility resources (i.e., maximum number of first signals); and
(5) a maximum number of candidate cell prediction sets supported on one downlink CC/BWP:
   for each prediction set, a maximum number of predictable downlink beams (pairs) (i.e., maximum number of sixth spatial filters), e.g., a maximum number of predictable SSRBIs and/or CRIs.

Based on the capability information reported by the UE, the NW may configure a measurement set Set Bm,n and a prediction set Set Ac required for model input for the UE.
(1) The NW configures a group of measurement sets Set Bm,n (1 <=m<=M, 1<=n <=N) for the UE using RRC signaling:
   Set Bm,n, as a downlink beam (pair) measurement set, may include CSI-RS for Mobility resources, CSI-RS resources, SSB resources, etc.
(2) The NW configures a downlink beam (pair) prediction set Set Ac (1 <=c <=C) output by the model for the UE:
   the NW may configure a group of prediction sets Set Ac (1 <=c <=C) for the UE using RRC signaling;
   Set Ac, as a beam (pair) prediction set, may include CSI-RS for Mobility resources, CSI-RS resources, SSB resources, etc.
(3) When configuring the prediction set Set Ac (1 <=c <=C), the NW needs to ensure that an output result of the model on the UE side is aligned with the prediction set Set Ac. For example, when the configured prediction sets are Set A1, Set A2, Set A3, and Set A4, the AI/ML model is required to select appropriate best candidate cells from candidate cells corresponding to the 4 prediction sets, and the number of best candidate cells needs to be less than or equal to 4. In a case where the AI/ML model is obtained from the NW side (Model Delivery) and the prediction set Set Ac is also configured by the NW, the NW needs to ensure alignment between a prediction result of the AI/ML model and the prediction set.

For input of the AI/ML model on the UE side, there are mainly the following two manners:
first manner: the UE only inputs link quality (i.e., first link quality) of reference signals of Set Bm,n (1 <=m<=M, 1<=n <=N) in a fixed order; and
second manner: input of the AI/ML model includes an index m and a time-domain index n of a measurement set in Set Bm,n, and corresponding first link quality, so that different Set Bm,n combinations can be flexibly selected as input of the AI/ML model.

It should be noted that link quality is generally L1-RSRP, and may also be L1-SINR, L1-RSSI, L1-RSRQ, CQI, etc.

Within a prediction time window (i.e., second time period), output content of the AI/ML model on the UE side may include one or more of the following:
(1) indices of Top-D best candidate cells (including a current serving cell);
(2) dwelling time (Cell Dwelling Time) of the UE in the Top-D best candidate cells;
(3) cell-level link quality, e.g., cell-level RSRP, within dwelling time of the Top-D best candidate cells;
   it should be noted that the cell-level RSRP is calculated as a linear average of multiple RSRPs meeting link quality (greater than a certain threshold);
(4) for any cell in the Top-D best candidate cells, output indices of Top-E best beams (pairs);
(5) dwelling time (Beam (Pair) Dwelling Time) of the UE on the Top-E best beams (pairs);
   it should be noted that for downlink transmission, a beam (pair) output by the AI/ML model may refer to a downlink transmit spatial filter and/or a downlink receive spatial filter; and for uplink transmission, a beam (pair) output by the AI/ML model may refer to an uplink transmit spatial filter and/or an uplink receive spatial filter;
   it should also be noted that in a case where uplink and downlink have beam symmetry, downlink and uplink beam dwelling time are consistent on a best beam of a certain best candidate cell; and in a case where good beam symmetry is not available, downlink and uplink beam dwelling time may be inconsistent on a best beam of a certain best candidate cell; and
(6) beam-level link quality, e.g., L1-RSRP of each beam (pair), within a candidate beam (pair) dwelling time.

The UE may periodically or semi-persistently report cell-level and/or beam (pair)-level prediction results according to a reporting period and an offset configured by the NW. For semi-persistent reporting of the UE, the NW needs to activate measurement and reporting of the UE after configuring the reporting period and offset. For aperiodic reporting of the UE, the NW may send DCI signaling to trigger the UE to perform measurement on N measurement instances, predict dwelling time, and report prediction results.

The UE may obtain one or more of the following based on Set Ac (1<=c<=C): best candidate cells, dwelling time of best candidate cells, link quality corresponding to best candidate cells, best beam (pair) indices of best candidate cells, dwelling time of the beams (pairs), and link quality (e.g., L1-RSRP) corresponding to best beam (pair) indices, so as to report the above prediction results within a period of time window (i.e., second time period) to the NW.

There are two manners of reporting best candidate cells:
first manner: for a best candidate cell, the UE needs to report a cell index, e.g., a PCI, a PCI Index, a Candidate Cell Index, or an index of Set Ac corresponding to the cell, i.e., a value of c; and for a beam (pair) index in a candidate cell, an existing resource index in an NR system, e.g., an SSBRI or a CRI, may be used; and
second manner: in a case where the NW configures SSB resources and/or CSI-RS resources of multiple candidate cells into a dedicated resource pool (or resource set) for multi-cell mobility, an SSBRI and/or a CRI may represent not only an SSB resource and/or a CSI-RS resource themselves, but also which candidate cell the resources are from. Therefore, the UE may report only the SSBRI and/or CRI without need to report a best candidate cell index, and the NW may infer a best candidate cell corresponding to the best beam (pair) through pre-configuration.

For link quality, L1-RSRP is used as an example in the embodiments of the present disclosure, and other link quality indicators, such as an L1-SINR or a CQI, are not excluded.

To carry prediction results of best candidate cells and best beams, a beam reporting format in the related art needs to be revised.

As shown in Table 1 (reporting without a best candidate cell index), beam-level reporting is adopted, where each CRI or SSBRI corresponds to one beam (pair) dwelling time. In a case where multiple CRIs or SSRBIs are reported to correspond to one candidate cell, the NW may determine dwelling time of the candidate cell.

With this method, the NW side is enabled to know best service time of candidate cells and/or candidate beams for the UE, so that when the service time expires, the NW can prepare the UE to switch to a next best candidate cell and/or candidate beam in advance, reducing delay of cell switch and/or beam switch.

As shown in Table 2 (reporting with a candidate cell index), the UE reports best candidate cells within a prediction time window (i.e., second time period), cell-level dwelling time and cell-level link performance, as well as best beams (pairs) in each best candidate cell, beam-level dwelling time and beam-level link performance.

For a predicted beam (pair), when a predicted target is a downlink transmit beam, a regular CRI or SSBRI may be used for representation; when a predicted target is a downlink transmit and receive beam, Beam (pair) may be used for reference.

In Rel-18 NR LTM standards, the NW is supported to perform cell switch using MAC CE signaling of CSC. The MAC CE signaling includes a candidate cell index and a Unified TCI State. The former is used to indicate a best candidate cell (i.e., third cell), and the latter is used to indicate a best beam (pair) (i.e., third spatial filter) in the best candidate cell.

In one CSC, the NW indicates one or more consecutive best candidate cell indices and cell-level dwelling time for the UE. After dwelling time of a best candidate cell expires, the UE may automatically switch to a next indicated best candidate cell and dwells for a corresponding duration, so as to reduce frequent delivery of CSCs.

In one CSC, the NW may indicate one or more consecutive best beam (pair) indices (via TCI State IDs) and beam-level dwelling time for each best candidate cell. After dwelling time of a best beam (pair) expires, the UE may automatically switch to a next best beam (pair) and dwells for a corresponding duration.

In some embodiments, dwelling time of best candidate cells and/or best candidate beams may be indicated through MAC CE signaling. The NW may preconfigure a length indication granularity of dwelling time through RRC signaling. For example, a minimum unit of dwelling time is 5 ms, and the MAC CE may indicate dwelling for N minimum dwelling time, i.e., 5*N ms.

For a best candidate cell, the NW may add a beam (pair) dwelling time to a beam switch indication, e.g., indicate one or more updated beam (pair) indices and their dwelling time of DCI format 1_1 or 1_2. When dwelling time of a beam (pair) expires, the UE may automatically switch to a next beam (pair) and dwell for a corresponding duration.

In some embodiments, the dwelling time of the best candidate cell and/or best candidate beam may be indicated via DCI signaling. The NW may configure possible dwelling time lengths via RRC, such as {5 ms, 10 ms, 15 ms, 50 ms}, corresponding to code points {00}, {01}, {10}, and {11} of a 2-bit field in DCI (the field may be named Dwelling time ofdicator).

It should be noted that indicating the dwelling time of the best candidate cell and/or best candidate beam via MAC CE signaling or DCI signaling can reduce frequent signaling delivery.

If the NW has sufficient resources to accommodate uplink and downlink transmission of the UE within the dwelling time of the candidate cell and/or candidate beam, the NW may inform the UE, via simple indication or confirmation information such as a flag or one bit, that it can autonomously switch candidate cells and/or candidate beams according to the prediction result.

It should be noted that the UE may perform a switch scheme without CSC indication, that is, after the cell-level dwelling time and/or beam (pair)-level dwelling time expires, the UE may autonomously switch to the best candidate cell and/or best beam (pair), thereby reducing signaling overhead.

### Embodiment 2: the AI/ML model is deployed on the NW side

Considering the generalization performance of the AI/ML model, an AI/ML model deployed on a specific UE may not adapt to a changing network environment. Therefore, deployment of the AI/ML model on the NW side may be considered. What requires UE assistance is that the UE performs time-domain mobility measurement, i.e., measuring Set Bm,n (1 ≤ m ≤ M, 1 ≤ n ≤ N), and reporting the measured first link quality to the NW.

FIG. 14 is a fourth detailed schematic flowchart of a communication method according to an embodiment of the present disclosure. As shown in FIG. 14, the method may include the following operations.

In S1401, a UE reports capability information of the UE to a NW.

The UE may report the capability information of the UE to the NW, where the capability information of the UE is used to indicate that the UE supports obtaining the first link quality.

Correspondingly, the NW may receive the capability information of the UE.

In S1402, the NW indicates Set Bm,n to the UE.

The NW may indicate Set Bm,n to the UE based on the capability information of the UE.

Correspondingly, the UE may receive Set Bm,n.

In S1403, the UE may measure Set Bm,n.

That is, the UE may measure reference signals on M candidate cells at N historical time instants, so as to obtain the first link quality.

In S1404, the UE reports the measured first link quality to the NW.

Correspondingly, the NW may receive the first link quality.

The NW may input the first link quality into the AI/ML model to obtain a prediction result.

In S1405, a cell switch indication is sent.

The NW may send a cell switch indication (i.e., fifth information) to the UE based on the prediction result.

In S1406, a beam switch indication is sent.

The NW may send a beam switch indication (i.e., fifth information) to the UE based on the prediction result.

In S1407, a cell switch indication is sent.

The NW may send a cell switch indication (i.e., fifth information) to the UE based on the prediction result.

It should be noted that since the AI/ML model is deployed on the NW side, the UE cannot know in advance the dwelling time T1 of the candidate cell and the dwelling time T1,1 and T1,2 of two candidate beams of the candidate cell, and thus cannot complete cell switch and/or beam (pair) switch autonomously, requiring explicit signaling indication from the NW, as shown by the solid line in FIG. 14.

Before the NW configures the measurement set Set Bm,n and prediction set Set Ac required by the AI/ML model for the UE, the UE needs to report to the NW via the capability information whether it supports obtaining the first link quality. If such a character is supported, the capability information reported by the UE includes but is not limited to:
(1) a maximum number of candidate cells (i.e., maximum number of fifth cells) supported to be measured on all downlink CC/BWPs:
   a maximum number of configurable measurement sets (generally, each measurement set corresponds to one candidate cell);
   a maximum number of measurement sets measurable simultaneously; and
   the number of measurable measurement time instants (i.e., second time instants) used as input to the AI/ML model;
(2) a maximum number of candidate cell measurement sets supported on one downlink CC/BWP:
   for each measurement set, a maximum number of measurable downlink SSB resources, CSI-RS resources, and/or CSI-RS for Mobility resources (i.e., maximum number of first signals).

Based on the capability information reported by the UE, the NW may configure the measurement set Set Bm,n required for model input for the UE.

The NW may configure a group of measurement sets Set Bm,n (1 ≤ m ≤ M, 1 ≤ n ≤ N) for the UE using RRC signaling.

As a downlink beam (pair) measurement set, Set Bm,n may include CSI-RS for Mobility resources, CSI-RS resources, SSB resources, and the like.

The UE may measure downlink reference signals of M candidate cells at N historical time instants based on the reported capability information and configuration from the NW. The UE then reports the measured result (e.g., first link quality) to the NW.

There are two ways to report the measurement result:
first manner: the UE may report the measurement result once in one reporting instance, with a specific format as shown in Table 3. This allows the NW to obtain the UE's measurement result as soon as possible and perform inference of candidate cell/candidate beam dwelling time as early as possible; and
second manner: the UE may report multiple measurement results to the NW in one reporting instance, with a specific format as shown in Table 4. This can reduce the number of reports of the UE and avoid unnecessary occupation of uplink resources.

It should be noted that the input and output of the AI/ML model on the NW side may refer to the input and output of the AI/ML model on the UE side in the foregoing embodiments, and details are not described herein again.

It should also be noted that when the AI/ML model is deployed on the NW side, the cell switch command and beam switch indication may refer to the descriptions in the foregoing embodiments, and details are not described herein again.

Embodiments of the present disclosure provide a communication method. A UE may perform cell switch and/or spatial filter switch in a timely manner based on a prediction result determined based on first link quality, so that the UE can directly switch from a cell and/or spatial filter with good link quality to another cell and/or spatial filter with good link quality, without experiencing performance degradation caused by untimely cell switch and/or spatial filter switch, thereby reducing the risk of radio link failure.

The preferred embodiments of the present disclosure are described in detail above with reference to the accompanying drawings. However, the present disclosure is not limited to the specific details in the foregoing embodiments. Within the scope of the technical concept of the present disclosure, many simple modifications may be made to the technical solutions of the present disclosure, and all these simple modifications fall within the protection scope of the present disclosure. For example, various specific technical features described in the foregoing specific embodiments may be combined in any appropriate manner without contradiction. To avoid unnecessary repetition, the present disclosure does not separately explain various possible combinations. For another example, various different embodiments of the present disclosure may also be combined arbitrarily as long as they do not violate the idea of the present disclosure, and such combinations shall also be regarded as content disclosed in the present disclosure. For another example, on the premise that no conflict occurs, various embodiments described in the present disclosure and/or technical features in various embodiments may be arbitrarily combined with the prior art, and the technical solution obtained after the combination shall also fall within the protection scope of the present disclosure.

It should also be understood that, in various method embodiments of the present disclosure, the sequence numbers of the foregoing operations do not mean the order of execution. The execution order of the operations shall be determined based on their functions and internal logic and shall not constitute any limitation on the implementation processes of the embodiments of the present disclosure.

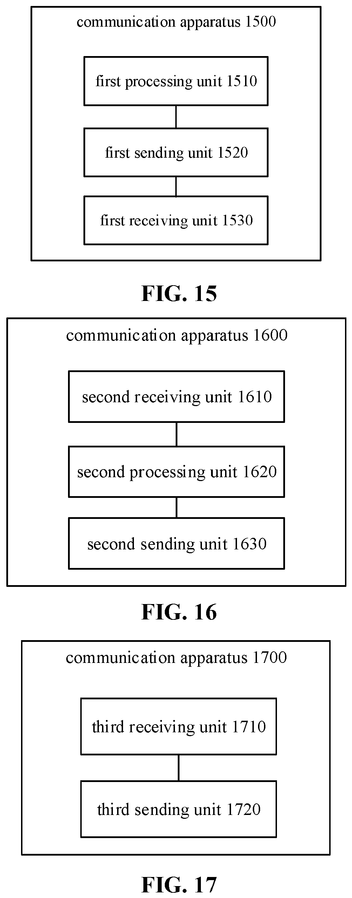

FIG. 15 is a schematic structural diagram of a communication apparatus 1500 according to an embodiment of the present disclosure, implemented by a terminal device. As shown in FIG. 15, the communication apparatus 1500 may include:
a first processing unit 1510, configured to obtain first link quality, where the first link quality is link quality of a first cell and/or first spatial filter within a first time period, the first link quality is used to determine a prediction result, the prediction result is related to a second cell and/or second spatial filter where the terminal device dwells within a second time period, and an end time of the first time period is earlier than a start time of the second time period.

In some embodiments, the first processing unit 1510 is further configured to determine the prediction result based on the first link quality.

In some embodiments, the first processing unit 1510 is further configured to input the first link quality into a first model to determine the prediction result.

In some embodiments, the first processing unit 1510 is further configured to input the first link quality and first information into the first model to determine the prediction result, where the first information includes one or more of the following:
an index of the first cell;
an index of the first spatial filter;
a first cycle, where the first cycle is a cycle for the terminal device to measure the first cell and/or first spatial filter within the first time period; and
an index of a first time instant, where the first time instant is a time instant at which the terminal device measures the first cell and/or first spatial filter within the first time period.

In some embodiments, the prediction result includes one or more of the following:
an index of the second cell;
dwelling time of the second cell;
link quality of the second cell within the dwelling time of the second cell;
an index of the second spatial filter;
dwelling time of the second spatial filter; and
link quality of the second spatial filter within the dwelling time of the second spatial filter.

In some embodiments, as shown in FIG. 15, the communication apparatus 1500 may further include:
a first sending unit 1520, configured to send the prediction result to a network device.

In some embodiments, as shown in FIG. 15, the communication apparatus 1500 may further include:
a first receiving unit 1530, configured to receive second information from the network device, where the second information is obtained based on the prediction result, and the second information is used to indicate one or more of the following:
an index of a third cell;
dwelling time of the third cell;
an index of a third spatial filter; and
dwelling time of the third spatial filter,
where the third cell is one or more of the second cells, and the third spatial filter is one or more of the second spatial filters.

In some embodiments, the first processing unit 1510 is further configured to perform cell switch and/or spatial filter switch based on the second information.

In some embodiments, the first receiving unit 1530 is further configured to receive third information from the network device, where the third information is used to instruct the terminal device to perform cell switch and/or spatial filter switch based on the prediction result.

In some embodiments, the first processing unit 1510 is further configured to not use the first model to obtain the prediction result when accuracy of the first model is less than a first threshold and/or confidence of the first model is less than a second threshold.

In some embodiments, the first receiving unit 1530 is further configured to receive fourth information from the network device, where the fourth information is carried via Radio Resource Control (RRC) signaling and/or Medium Access Control Control Element (MAC CE) signaling, and the fourth information is used to instruct to turn off or suspend the first model; the first processing unit 1510 is further configured to not use the first model to obtain the prediction result based on the fourth information.

In some embodiments, the first sending unit 1520 is further configured to send the first link quality to the network device.

In some embodiments, the first sending unit 1520 is further configured to send first information to the network device, where the first information and the first link quality are used to determine the prediction result, and the first information includes one or more of the following:
an index of the first cell;
an index of the first spatial filter;
a first cycle, where the first cycle is a cycle for the terminal device to measure the first cell and/or first spatial filter within the first time period; and
an index of a first time instant, where the first time instant is a time instant at which the terminal device measures the first cell and/or first spatial filter within the first time period.

In some embodiments, the first receiving unit 1530 is further configured to receive fifth information from the network device, where the fifth information is related to the first link quality, and the fifth information is used to indicate one or more of the following:
an index of a fourth cell;
dwelling time of the fourth cell;
an index of a fourth spatial filter; and
dwelling time of the fourth spatial filter,
where the fourth cell is one or more of the second cells, and the fourth spatial filter is one or more of the second spatial filters.

In some embodiments, the first processing unit 1510 is further configured to perform cell switch and/or spatial filter switch based on the fifth information.

In some embodiments, the second information and/or the fifth information is carried via MAC CE signaling or Downlink Control Information (DCI) signaling.

In some embodiments, the first sending unit 1520 is further configured to send capability information of the terminal device to the network device, where the capability information of the terminal device is used to indicate that the terminal device supports obtaining the first link quality, and/or supports determining the prediction result based on the first link quality.

In some embodiments, the capability information of the terminal device includes one or more of the following:
a maximum number of fifth cells supported by the terminal device, where the fifth cells are cells that the terminal device can measure within the first time period, and the fifth cells include the first cell;
a maximum number of fifth spatial filters supported by the terminal device, where the fifth spatial filters are spatial filters that the terminal device can measure within the first time period, and the fifth spatial filters include the first spatial filter;
a maximum number of first signals supported to be measured by the terminal device, where the first signals are reference signals on the fifth cells and/or fifth spatial filters;
a maximum length of a second cycle supported by the terminal device, where the second cycle is a cycle for the terminal device to measure the fifth cells and/or fifth spatial filters within the first time period;
a maximum number of second time instants supported by the terminal device, where the second time instants are time instants at which the terminal device measures the fifth cells and/or fifth spatial filters within the first time period;
a maximum number of sixth cells supported by the terminal device, where the sixth cells are cells that the terminal device can dwell within the second time period, and the sixth cells include the second cell;
a maximum number of sixth spatial filters supported by the terminal device, where the sixth spatial filters are spatial filters that the terminal device can dwell within the second time period, and the sixth spatial filters ofclude the second spatial filter;
dwelling time of the sixth cells that the terminal device supports obtaining;
dwelling time of the sixth spatial filters that the terminal device supports obtaining; and
a maximum length of the dwelling time of the sixth cells that the terminal device supports obtaining.

In some embodiments, the first receiving unit 1530 is further configured to receive sixth information from the network device, where the sixth information includes one or more of the following:
an index of a seventh cell which is a cell configured by the network device for the terminal device to measure within the first time period and includes the first cell;
an index of a seventh spatial filter which is a spatial filter configured by the network device for the terminal device to measure within the first time period and includes the first spatial filter;
an index of a second signal which is a reference signal on the seventh cell and/or the seventh spatial filter;
a length of a third cycle which is a cycle for the terminal device to measure the seventh cell and/or the seventh spatial filter within the first time period;
an index of a third time instant which is a time instant at which the terminal device measures the seventh cell and/or the seventh spatial filter within the first time period;
an index of an eighth cell which is a cell configured by the network device for the terminal device to dwell within the second time period and includes the second cell; and
an index of an eighth spatial filter which is a spatial filter configured by the network device for the terminal device to dwell within the second time period and includes the second spatial filter.

In some embodiments, the sixth information is related to the capability information of the terminal device.

In some embodiments, the first link quality may be obtained by the terminal device by measuring a third signal within the first time period, where the third signal is a reference signal on the first cell and/or the first spatial filter.

In some embodiments, the third signal includes a Synchronization Signal Block (SSB) and/or a Channel State Information-Reference Signal (CSI-RS).

Embodiments of the present disclosure provide a communication apparatus. A terminal device can obtain first link quality which is the link quality of a first cell and/or a first spatial filter within a first time period. The first link quality is used to determine a prediction result related to a second cell and/or a second spatial filter where the terminal device dwells within a second time period, and the end time of the first time period is earlier than the start time of the second time period. In this way, the terminal device can perform cell switch and/or spatial filter switch in a timely manner based on the prediction result determined from the first link quality, enabling it to switch directly from a cell and/or spatial filter with good link quality to another one with good link quality, avoiding performance degradation caused by delayed cell switch and/or spatial filter switch, and reducing the risk of radio link failure.

Those skilled in the art shall understand that the relevant description of the above communication apparatus in the embodiments of the present disclosure can be interpreted with reference to the relevant description of the communication method in the embodiments of the present disclosure.

FIG. 16 is a schematic structural diagram of a communication apparatus 1600 provided in an embodiment of the present disclosure, implemented by a network device. As shown in FIG. 16, the communication apparatus 1600 may include:
a second receiving unit 1610, configured to receive first link quality from a terminal device, where the first link quality is the link quality of a first cell and/or a first spatial filter within a first time period. The first link quality is used to determine a prediction result related to a second cell and/or a second spatial filter where the terminal device dwells within a second time period, and the end time of the first time period is earlier than the start time of the second time period.

In some embodiments, the communication apparatus 1600 may further include:
a second processing unit 1620, configured to determine a prediction result based on the first link quality.

In some embodiments, the second processing unit 1620 is further configured to input the first link quality into a second model to determine the prediction result.

In some embodiments, the second processing unit 1620 is further configured to input the first link quality and first information into the second model to determine the prediction result, where the first information includes one or more of the following:
an index of the first cell;
an index of the first spatial filter;
a first cycle, which is a period for the terminal device to measure the first cell and/or the first spatial filter within the first time period; and
an index of a first time instant, which is a time instant at which the terminal device measures the first cell and/or the first spatial filter within the first time period.

In some embodiments, the first information may be sent by the terminal device.

In some embodiments, the prediction result includes one or more of the following:
an index of the second cell;
wwelling time in the second cell;
link quality of the second cell within its dwelling time;
an index of the second spatial filter;
dwelling time of the second spatial filter; and
link quality of the second spatial filter within its dwelling time.

In some embodiments, the communication apparatus 1600 may further include:
a second sending unit 1630, configured to send fifth information to the terminal device based on the prediction result. The fifth information is used by the terminal device to perform cell switch and/or spatial filter switch, and indicates one or more of the following:
an index of a fourth cell;
dwelling time of the fourth cell;
an index of a fourth spatial filter; and
dwelling time of the fourth spatial filter,
where the fourth cell is one or more of the second cells, and the fourth spatial filter is one or more of the second spatial filters.

In some embodiments, the fifth information is carried via MAC CE signaling or DCI signaling.

In some embodiments, the second processing unit 1620 is further configured to not use the second model to obtain the prediction result when the accuracy of the second model is lower than a third threshold and/or the confidence of the second model is lower than a fourth threshold.

In some embodiments, the second receiving unit 1610 is further configured to receive capability information from the terminal device, where the capability information of the terminal device indicates that the terminal device supports obtaining the first link quality.

In some embodiments, the capability information of the terminal device includes one or more of the following:
a maximum number of fifth cells supported by the terminal device, where the fifth cells are cells the terminal device can measure within the first time period and include the first cell;
a maximum number of fifth spatial filters supported by the terminal device, where the fifth spatial filters are spatial filters the terminal device can measure within the first time period and include the first spatial filter;
a maximum number of first signals measurable by the terminal device, where the first signals are reference signals on the fifth cells and/or fifth spatial filters;
a maximum length of a second cycle supported by the terminal device, where the second cycle is a cycle for the terminal device to measure the fifth cells and/or fifth spatial filters within the first time period; and
a maximum number of second time instants supported by the terminal device, where the second time instants are time instants at which the terminal device measures the fifth cells and/or fifth spatial filters within the first time period.

In some embodiments, the second sending unit 1630 is further configured to send sixth information to the terminal device, where the sixth information includes one or more of the following:
an index of a seventh cell which is a cell configured by the network device for the terminal device to measure within the first time period and includes the first cell;
an index of a seventh spatial filter which is a spatial filter configured by the network device for the terminal device to measure within the first time period and includes the first spatial filter;
an index of a second signal which is a reference signal on the seventh cell and/or the seventh spatial filter;
a length of a third cycle which is a cycle for the terminal device to measure the seventh cell and/or the seventh spatial filter within the first time period; and
an index of a third time instant which is a time instant at which the terminal device measures the seventh cell and/or the seventh spatial filter within the first time period.

In some embodiments, the sixth information is related to the capability information of the terminal device.

In some embodiments, the first link quality may be obtained by the terminal device by measuring a third signal within the first time period, where the third signal is a reference signal on the first cell and/or the first spatial filter.

In some embodiments, the third signal includes an SSB and/or a CSI-RS.

Embodiments of the present disclosure provide a communication apparatus. A network device can receive first link quality from a terminal device, which is the link quality of a first cell and/or a first spatial filter within a first time period. The first link quality is used to determine a prediction result related to a second cell and/or a second spatial filter where the terminal device dwells within a second time period, and the end time of the first time period is earlier than the start time of the second time period. In this way, the network device can timely instruct the terminal device to perform cell switch and/or spatial filter switch based on the prediction result determined from the first link quality, enabling the terminal device to switch directly from a cell and/or spatial filter with good link quality to another one with good link quality, avoiding performance degradation caused by delayed switch and reducing the risk of radio link failure.

Those skilled in the art shall understand that the relevant description of the above communication apparatus in the embodiments of the present disclosure can be interpreted with reference to the relevant description of the communication method in the embodiments of the present disclosure.

FIG. 17 is a schematic structural diagram of a communication apparatus 1700 provided in an embodiment of the present disclosure, implemented by a network device. As shown in FIG. 17, the communication apparatus 1700 may include:
a third receiving unit 1710, configured to receive capability information of a terminal device, where the capability information indicates that the terminal device supports obtaining first link quality and/or determining a prediction result based on the first link quality. The prediction result is related to a second cell and/or a second spatial filter where the terminal device dwells within a second time period,
where the first link quality is the link quality of a first cell and/or a first spatial filter within a first time period, and the end time of the first time period is earlier than the start time of the second time period.

In some embodiments, the capability information of the terminal device includes one or more of the following:
a maximum number of fifth cells supported by the terminal device, where the fifth cells are cells the terminal device can measure within the first time period and include the first cell;
a maximum number of fifth spatial filters supported by the terminal device, where the fifth spatial filters are spatial filters the terminal device can measure within the first time period and include the first spatial filter;
a maximum number of first signals measurable by the terminal device, where the first signals are reference signals on the fifth cells and/or fifth spatial filters;
a maximum length of a second cycle supported by the terminal device, where the second cycle is a cycle for the terminal device to measure the fifth cells and/or fifth spatial filters within the first time period;
a maximum number of second time instants supported by the terminal device, where the second time instants are time instants at which the terminal device measures the fifth cells and/or fifth spatial filters within the first time period;
a maximum number of sixth cells supported by the terminal device, where the sixth cells are cells the terminal device can dwell within the second time period and include the second cell;
a maximum number of sixth spatial filters supported by the terminal device, where the sixth spatial filters are spatial filters the terminal device can dwell within the second time period and include the second spatial filter;
dwelling time of the sixth cells that the terminal device supports obtaining;
dwelling time of the sixth spatial filters that the terminal device supports obtaining; and
a maximum length of the dwelling time of the sixth cells that the terminal device supports obtaining.

In some embodiments, the communication apparatus 1700 may further include:
a third sending unit 1720, configured to send sixth information to the terminal device, where the sixth information includes one or more of the following:
an index of a seventh cell which is a cell configured by the network device for the terminal device to measure within the first time period and includes the first cell;
an index of a seventh spatial filter which is a spatial filter configured by the network device for the terminal device to measure within the first time period and includes the first spatial filter;
an index of a second signal which is a reference signal on the seventh cell and/or the seventh spatial filter;
a length of a third cycle which is a cycle for the terminal device to measure the seventh cell and/or the seventh spatial filter within the first time period;
an index of a third time instant which is a time instant at which the terminal device measures the seventh cell and/or the seventh spatial filter within the first time period;
an index of an eighth cell which is a cell configured by the network device for the terminal device to dwell within the second time period and includes the second cell; and
an index of an eighth spatial filter which is a spatial filter configured by the network device for the terminal device to dwell within the second time period and includes the second spatial filter.

In some embodiments, the sixth information is related to the capability information of the terminal device.

In some embodiments, the prediction result includes one or more of the following:
an index of the second cell;
dwelling time of the second cell;
link quality of the second cell within its dwelling time;
an index of the second spatial filter;
dwelling time of the second spatial filter; and
link quality of the second spatial filter within its dwelling time.

In some embodiments, the third receiving unit 1710 is further configured to receive a prediction result from the terminal device.

In some embodiments, the third sending unit 1720 is further configured to send second information to the terminal device based on the prediction result. The second information is used by the terminal device to perform cell switch and/or spatial filter switch, and indicates one or more of the following:
an index of a third cell;
dwelling time of the third cell;
an index of a third spatial filter; and
dwelling time of the third spatial filter,
where the third cell is one or more of the second cells, and the third spatial filter is one or more of the second spatial filters.

In some embodiments, the second information is carried via MAC CE signaling or DCI signaling.

In some embodiments, the third sending unit 1720 is further configured to send third information to the terminal device, where the third information is used to instruct the terminal device to perform cell switch and/or spatial filter switch based on the prediction result.

In some embodiments, the first link quality may be obtained by the terminal device by measuring a third signal within the first time period, where the third signal is a reference signal on the first cell and/or the first spatial filter.

In some embodiments, the third signal includes an SSB and/or a CSI-RS.

Embodiments of the present disclosure provide a communication apparatus. A network device may receive capability information of a terminal device, where the capability information indicates that the terminal device supports obtaining first link quality and/or determining a prediction result based on the first link quality. The prediction result is related to a second cell and/or a second spatial filter where the terminal device dwells within a second time period. In this way, the network device may configure information required for the terminal device to obtain the first link quality based on the capability information of the terminal device, enabling the terminal device to timely perform cell switch and/or spatial filter switch according to the prediction result determined from the first link quality. This avoids performance degradation caused by delayed cell switch and/or spatial filter switch, and reduces the risk of radio link failure.

Those skilled in the art shall understand that the relevant description of the above communication apparatuses in the embodiments of the present disclosure may be interpreted with reference to the relevant description of the communication methods in the embodiments of the present disclosure.

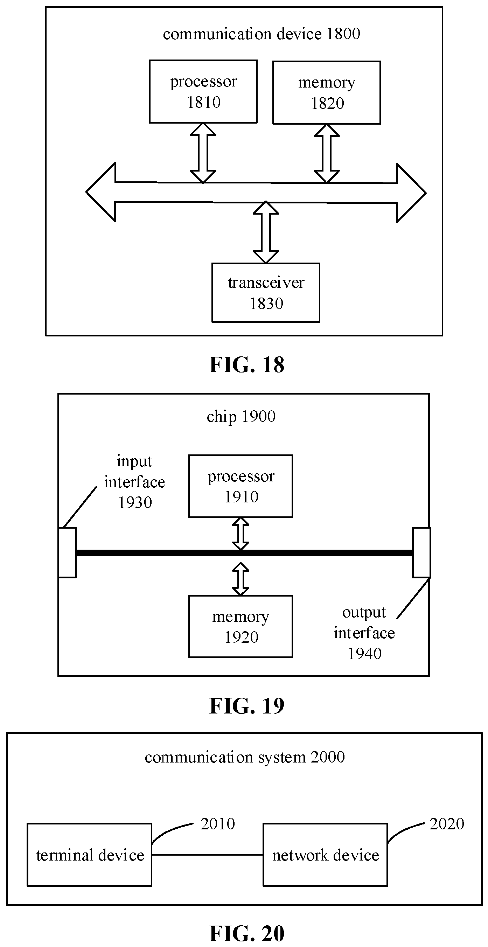

FIG. 18 is a schematic structural diagram of a communication device provided in an embodiment of the present disclosure. The communication device 1800 may be a terminal device or a network device. The communication device 1800 shown in FIG. 18 may include a processor 1810, a memory 1820, and a transceiver 1830, where:

The memory 1820 is configured to store a computer program.

The processor 1810 is connected to the memory 1820, and configured to invoke and run the computer program from the memory 1820 to implement the methods in the embodiments of the present disclosure.

The transceiver 1830, also referred to as a communication interface, is configured to receive and transmit information from and to other external devices.

In some embodiments, the memory 1820 may be a separate device independent of the processor 1810, or may be integrated into the processor 1810.

In some embodiments, the transceiver 1830 may include an input interface. The processor 1810 may control the input interface to communicate with other external devices, and specifically may receive information or data from other external devices.

In some embodiments, the transceiver 1830 may include an output interface. The processor 1810 may control the output interface to communicate with other external devices, and specifically may send information or data to other external devices.

In some embodiments, the transceiver 1830 may include a transmitter and a receiver. The transceiver 1830 may further include antennas, and the number of antennas may be one or more.

In some embodiments, the communication device 1800 may be implemented by a network device in the embodiments of the present disclosure, and may implement corresponding processes performed by the network device in various methods of the embodiments of the present disclosure. For brevity, details are not repeated herein again.

In some embodiments, the communication device 1800 may be implemented by a terminal device in the embodiments of the present disclosure, and may implement corresponding processes performed by the terminal device in various methods of the embodiments of the present disclosure. For brevity, details are not repeated herein again.

FIG. 19 is a schematic structural diagram of a chip provided in an embodiment of the present disclosure. The chip 1900 shown in FIG. 19 includes a processor 1910, which may invoke and run a computer program from a memory to implement the methods in the embodiments of the present disclosure.

In some embodiments, as shown in FIG. 19, the chip 1900 may further include a memory 1920. The processor 1910 may invoke and run the computer program from the memory 1920 to implement the methods in the embodiments of the present disclosure.

The memory 1920 may be a separate device independent of the processor 1910, or may be integrated into the processor 1910.

In some embodiments, the chip 1900 may further include an input interface 1930. The processor 1910 may control the input interface 1930 to communicate with other devices or chips, and specifically may obtain information or data from other devices or chips.

In some embodiments, the chip 1900 may further include an output interface 1940. The processor 1910 may control the output interface 1940 to communicate with other devices or chips, and specifically may output information or data to other devices or chips.

In some embodiments, the chip may be implemented by a terminal device in the embodiments of the present disclosure, and may implement corresponding processes performed by the terminal device in various methods of the embodiments of the present disclosure. For brevity, details are not repeated herein again.

In some embodiments, the chip may be implemented by a network device in the embodiments of the present disclosure, and may implement corresponding processes performed by the network device in various methods of the embodiments of the present disclosure. For brevity, details are not repeated herein again.

It should be understood that the chip mentioned in the embodiments of the present disclosure may also be referred to as a system-level chip, a system chip, a chip system, or a system-on-chip.

FIG. 20 is a schematic block diagram of a communication system provided in an embodiment of the present disclosure. As shown in FIG. 20, the communication system 2000 includes a terminal device 2010 and a network device 2020.

The terminal device 2010 may be configured to implement corresponding functions performed by the terminal device in the above methods, and the network device 2020 may be configured to implement corresponding functions performed by the network device in the above methods. For brevity, details are not described herein again.

It should be understood that the processor in the embodiments of the present disclosure may be an integrated circuit chip with signal processing capability. During implementation, the operations of the above method embodiments may be completed by hardware integrated logic circuits in the processor or instructions in the form of software. The processor may be a general-purpose processor, a Digital Signal Processor (DSP), an Application Specific Integrated Circuit (ASIC), a Field Programmable Gate Array (FPGA) or other programmable logic devices, discrete gate or transistor logic devices, or discrete hardware components. The methods, operations, and logical block diagrams in the embodiments of the present disclosure may be implemented or executed. A general-purpose processor may be a microprocessor or any regular processor. The operations of the methods in combination with the embodiments of the present disclosure may be directly embodied as being completed by a hardware decoding processor, or by a combination of hardware and software modules in a decoding processor. The software module may be located in a mature storage medium in the art such as a random access memory, a flash memory, a read-only memory, a programmable read-only memory, an electrically erasable programmable memory, or a register. The storage medium is located in the memory, and the processor reads information from the memory and completes the operations of the above methods in combination with its hardware.

It may be understood that the memory in the embodiments of the present disclosure may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example and not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable types of memory.

It should be understood that the above memory is an example and not a limitation. For example, the memory in the embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), Direct Rambus RAM (DR RAM), and so on. That is, the memory in the embodiments of the present disclosure is intended to include, but is not limited to, these and any other suitable types of memory.

Embodiments of the present disclosure further provide a computer-readable storage medium storing a computer program. When executed by at least one processor, the computer program may implement the methods in the embodiments of the present disclosure.

In some embodiments, the computer-readable storage medium may be implemented by a network device in the embodiments of the present disclosure, and the computer program may cause a computer to execute corresponding processes performed by the network device in various methods of the embodiments of the present disclosure. For brevity, details are not described herein again.

In some embodiments, the computer-readable storage medium may be implemented by a terminal device in the embodiments of the present disclosure, and the computer program may cause a computer to execute corresponding processes performed by the terminal device in various methods of the embodiments of the present disclosure. For brevity, details are not described herein again.

Embodiments of the present disclosure further provide a computer program product including a computer storage medium storing a computer program. The computer program includes instructions executable by at least one processor, and when executed by the at least one processor, the instructions may implement the methods in the embodiments of the present disclosure.

In some embodiments, the computer program product may be implemented by a network device in the embodiments of the present disclosure, and the computer program instructions may cause a computer to execute corresponding processes performed by the network device in various methods of the embodiments of the present disclosure. For brevity, details are not described herein again.

In some embodiments, the computer program product may be implemented by a terminal device in the embodiments of the present disclosure, and the computer program instructions may cause a computer to execute corresponding processes performed by the terminal device in various methods of the embodiments of the present disclosure. For brevity, details are not described herein again.

Embodiments of the present disclosure further provide a computer program that causes a computer to execute the methods in the embodiments of the present disclosure.

In some embodiments, the computer program may be implemented by a network device in the embodiments of the present disclosure. When the computer program runs on a computer, it may cause the computer to execute corresponding processes performed by the network device in various methods of the embodiments of the present disclosure. For brevity, details are not described herein again.

In some embodiments, the computer program may be implemented by a terminal device in the embodiments of the present disclosure. When the computer program runs on a computer, it may cause the computer to execute corresponding processes performed by the terminal device in various methods of the embodiments of the present disclosure. For brevity, details are not described herein again.

Those of ordinary skill in the art may realize that the units and algorithm operations of each example described in connection with the embodiments disclosed herein may be implemented by electronic hardware, or a combination of computer software and electronic hardware. Whether these functions are performed by hardware or software depends on the specific application and design constraints of the technical solution. Skilled artisans may use different methods to implement the described functions for each specific application, but such implementation should not be considered to exceed the scope of the present disclosure.

Those skilled in the art may clearly understand that, for the convenience and brevity of description, the specific working processes of the above-described systems, apparatuses and units may refer to the corresponding processes in the foregoing method embodiments, and details are not described herein again.

In the several embodiments provided in the present disclosure, it should be understood that the disclosed systems, apparatuses and methods may be implemented in other manners. For example, the apparatus embodiments described above are merely illustrative. For example, the division of the units is only a logical function division, and there may be another division manner in actual implementation. For example, multiple units or components may be combined or integrated into another system, or some features may be ignored or not executed. In addition, the mutual coupling or direct coupling or communication connection shown or discussed may be indirect coupling or communication connection through some interfaces, apparatuses or units, and may be in electrical, mechanical or other forms.

The units described as separate components may or may not be physically separated, and the components shown as units may or may not be physical units, that is, they may be located in one place, or may be distributed to multiple network units. Some or all of the units may be selected according to actual needs to achieve the objectives of the solutions of the embodiments.

In addition, each functional unit in each embodiment of the present disclosure may be integrated into one processing unit, or each unit may exist alone physically, or two or more units may be integrated into one unit.

When the functions are implemented in the form of software functional units and sold or used as independent products, the functions may be stored in a computer-readable storage medium. Based on such understanding, the essence of the technical solution of the present disclosure, or the parts contributing to the prior art, or part of the technical solutions may be embodied in the form of a software product. The computer software product is stored in a storage medium and includes several instructions to enable a computer device (which may be a personal computer, a server, or a network device) to execute all or part of the operations of the methods described in the embodiments of the present disclosure. The foregoing storage medium includes: a USB flash drive, a removable hard disk, a Read-Only Memory (ROM), a Random Access Memory (RAM), a magnetic disk, an optical disk, and other various media that can store program codes.

The above are merely specific implementations of the present disclosure, but the protection scope of the present disclosure is not limited thereto. Any person skilled in the art can easily conceive of changes or substitutions within the technical scope disclosed in the present disclosure, and all such changes or substitutions shall be covered by the protection scope of the present disclosure. Therefore, the protection scope of the present disclosure shall be subject to the protection scope of the claims.

## Claims

1. A communication method, comprising:
obtaining, by a terminal device, first link quality, wherein the first link quality is link quality of a first cell and/or a first spatial filter during a first time period, the first link quality is used to determine a prediction result, the prediction result is related to a second cell and/or a second spatial filter where the terminal device dwells during a second time period, and an end time of the first time period is earlier than a start time of the second time period.

2. The method of claim 1, further comprising:
determining, by the terminal device, the prediction result based on the first link quality.

3. The method of claim 2, wherein determining, by the terminal device, the prediction result based on the first link quality comprises:
inputting, by the terminal device, the first link quality into a first model to determine the prediction result.

4. The method of claim 2 or 3, wherein determining, by the terminal device, the prediction result based on the first link quality comprises:
inputting, by the terminal device, the first link quality and first information into a first model to determine the prediction result,
wherein the first information comprises one or more of:
an index of the first cell;
an index of the first spatial filter;
a first cycle, wherein the first cycle is a cycle during which the terminal device measures the first cell and/or the first spatial filter during the first time period; and
an index of a first time instant, wherein the first time instant is a time instant at which the terminal device measures the first cell and/or the first spatial filter during the first time period.

5. The method of any one of claims 1 to 4, wherein the prediction result comprises one or more of:
an index of the second cell;
dwelling time of the second cell;
link quality of the second cell during the dwelling time of the second cell;
an index of the second spatial filter;
dwelling time of the second spatial filter; and
link quality of the second spatial filter during the dwelling time of the second spatial filter.

6. The method of claim 5, further comprising:
sending, by the terminal device, the prediction result to a network device.

7. The method of claim 6, further comprising:
receiving, by the terminal device, second information from the network device, wherein the second information is obtained based on the prediction result, and the second information is used to indicate one or more of:
an index of a third cell;
dwelling time of the third cell;
an index of a third spatial filter; and
dwelling time of the third spatial filter,
wherein the third cell is one or more of the second cells, and the third spatial filter is one or more of the second spatial filters.

8. The method of claim 7, further comprising:
performing, by the terminal device, cell switch and/or spatial filter switch based on the second information.

9. The method of claim 6, further comprising:
receiving, by the terminal device, third information from the network device, wherein the third information is used to instruct the terminal device to perform cell switch and/or spatial filter switch based on the prediction result.

10. The method of any one of claims 3 to 9, further comprising:
refraining, by the terminal device, from using the first model to obtain the prediction result, in a case where accuracy of the first model is less than a first threshold, and/or confidence of the first model is less than a second threshold.

11. The method of any one of claims 3 to 10, further comprising:
receiving, by the terminal device, fourth information from a network device, wherein the fourth information is carried by Radio Resource Control (RRC) signaling and/or Medium Access Control Control Element (MAC CE) signaling, and the fourth information is used to indicate turning off or suspending the first model; and
refraining, by the terminal device, from using the first model to obtain the prediction result based on the fourth information.

12. The method of claim 1, further comprising:
sending, by the terminal device, the first link quality to a network device.

13. The method of claim 12, further comprising:
sending, by the terminal device, first information to the network device, wherein the first information and the first link quality are used to determine the prediction result, and the first information comprises one or more of:
an index of the first cell;
an index of the first spatial filter;
a first cycle, wherein the first cycle is a cycle during which the terminal device measures the first cell and/or the first spatial filter during the first time period; and
an index of a first time instant, wherein the first time instant is a time instant at which the terminal device measures the first cell and/or the first spatial filter during the first time period.

14. The method of claim 12 or 13, further comprising:
receiving, by the terminal device, fifth information from the network device, wherein the fifth information is related to the first link quality, and the fifth information is used to indicate one or more of:
an index of a fourth cell;
dwelling time of the fourth cell;
an index of a fourth spatial filter; and
dwelling time of the fourth spatial filter,
wherein the fourth cell is one or more of the second cells, and the fourth spatial filter is one or more of the second spatial filters.

15. The method of claim 14, further comprising:
performing, by the terminal device, cell switch and/or spatial filter switch based on the fifth information.

16. The method of any one of claims 7, 8, 14 and 15, wherein the second information and/or the fifth information is carried by MAC CE signaling or Downlink Control Information (DCI) signaling.

17. The method of any one of claims 1 to 16, further comprising:
sending, by the terminal device, capability information of the terminal device to a network device, wherein the capability information of the terminal device is used to represent that the terminal device supports obtaining the first link quality, and/or supports determining the prediction result based on the first link quality.

18. The method of claim 17, wherein the capability information of the terminal device comprises one or more of:
a maximum number of fifth cells supported by the terminal device, wherein the fifth cells are cells that the terminal device is capable of measuring during the first time period, and the fifth cells comprise the first cell;
a maximum number of fifth spatial filters supported by the terminal device, wherein the fifth spatial filters are spatial filters that the terminal device is capable of measuring during the first time period, and the fifth spatial filters comprise the first spatial filter;
a maximum number of first signals measurable by the terminal device, wherein the first signals are reference signals on the fifth cells and/or the fifth spatial filters;
a maximum length of a second cycle supported by the terminal device, wherein the second cycle is a cycle during which the terminal device measures the fifth cells and/or the fifth spatial filters during the first time period;
a maximum number of second time instants supported by the terminal device, wherein the second time instants are time instants at which the terminal device measures the fifth cells and/or the fifth spatial filters during the first time period;
a maximum number of sixth cells supported by the terminal device, wherein the sixth cells are cells that the terminal device is capable of dwelling during the second time period, and the sixth cells comprise the second cell;
a maximum number of sixth spatial filters supported by the terminal device, wherein the sixth spatial filters are spatial filters that the terminal device is capable of dwelling during the second time period, and the sixth spatial filters comprise the second spatial filter;
dwelling time of the sixth cells that the terminal device supports obtaining;
dwelling time of the sixth spatial filters that the terminal device supports obtaining; and
a maximum length of the dwelling time of the sixth cells that the terminal device supports obtaining.

19. The method of any one of claims 1 to 18, further comprising:
receiving, by the terminal device, sixth information from a network device, wherein the sixth information comprises one or more of:
an index of a seventh cell, wherein the seventh cell is a cell configured by the network device to be measured by the terminal device during the first time period, and the seventh cell comprises the first cell;
an index of a seventh spatial filter, wherein the seventh spatial filter is a spatial filter configured by the network device to be measured by the terminal device during the first time period, and the seventh spatial filter comprises the first spatial filter;
an index of a second signal, wherein the second signal is a reference signal on the seventh cell and/or the seventh spatial filter;
a length of a third cycle, wherein the third cycle is a cycle during which the terminal device measures the seventh cell and/or the seventh spatial filter during the first time period;
an index of a third time instant, wherein the third time instant is a time instant at which the terminal device measures the seventh cell and/or the seventh spatial filter during the first time period;
an index of an eighth cell, wherein the eighth cell is a cell configured by the network device for the terminal device to dwell during the second time period, and the eighth cell comprises the second cell; and
an index of an eighth spatial filter, wherein the eighth spatial filter is a spatial filter configured by the network device for the terminal device to dwell during the second time period, and the eighth spatial filter comprises the second spatial filter.

20. The method of claim 19, wherein the sixth information is related to capability information of the terminal device.

21. The method of any one of claims 1 to 20, wherein the first link quality is obtained by the terminal device by measuring a third signal during the first time period, wherein the third signal is a reference signal on the first cell and/or the first spatial filter.

22. The method of claim 21, wherein the third signal comprises a Synchronization Signal Block (SSB) and/or a Channel State Information-Reference Signal (CSI-RS).

23. A communication method, comprising:
receiving, by a network device, first link quality from a terminal device, wherein the first link quality is link quality of a first cell and/or a first spatial filter during a first time period, the first link quality is used to determine a prediction result, the prediction result is related to a second cell and/or a second spatial filter where the terminal device dwells during a second time period, and an end time of the first time period is earlier than a start time of the second time period.

24. The method of claim 23, further comprising:
determining, by the network device, the prediction result based on the first link quality.

25. The method of claim 24, wherein determining, by the network device, the prediction result based on the first link quality comprises:
inputting, by the network device, the first link quality into a second model to determine the prediction result.

26. The method of claim 24 or 25, wherein determining, by the network device, the prediction result based on the first link quality comprises:
inputting, by the network device, the first link quality and first information into a second model to determine the prediction result,
wherein the first information comprises one or more of:
an index of the first cell;
an index of the first spatial filter;
a first cycle, wherein the first cycle is a cycle during which the terminal device measures the first cell and/or the first spatial filter during the first time period; and
an index of a first time instant, wherein the first time instant is a time instant at which the terminal device measures the first cell and/or the first spatial filter during the first time period.

27. The method of claim 26, wherein the first information is sent by the terminal device.

28. The method of any one of claims 23 to 27, wherein the prediction result comprises one or more of:
an index of the second cell;
dwelling time of the second cell;
link quality of the second cell during the dwelling time of the second cell;
an index of the second spatial filter;
dwelling time of the second spatial filter; and
link quality of the second spatial filter during the dwelling time of the second spatial filter.

29. The method of any one of claims 23 to 28, further comprising:
sending, by the network device, fifth information to the terminal device based on the prediction result, wherein the fifth information is used for the terminal device to perform cell switch and/or spatial filter switch, and the fifth information is used to indicate one or more of:
an index of a fourth cell;
dwelling time of the fourth cell;
an index of a fourth spatial filter;
dwelling time of the fourth spatial filter,
wherein the fourth cell is one or more of the second cells, and the fourth spatial filter is one or more of the second spatial filters.

30. The method of claim 29, wherein the fifth information is carried by Medium Access Control Control Element (MAC CE) signaling or Downlink Control Information (DCI) signaling.

31. The method of any one of claims 25 to 30, further comprising:
refraining, by the network device, from using the second model to obtain the prediction result, in a case where accuracy of the second model is less than a third threshold, and/or confidence of the second model is less than a fourth threshold.

32. The method of any one of claims 23 to 31, further comprising:
receiving, by the network device, capability information from the terminal device, wherein the capability information of the terminal device is used to represent that the terminal device supports obtaining the first link quality.

33. The method of claim 32, wherein the capability information of the terminal device comprises one or more of:
a maximum number of fifth cells supported by the terminal device, wherein the fifth cells are cells that the terminal device is capable of measuring during the first time period, and the fifth cells comprise the first cell;
a maximum number of fifth spatial filters supported by the terminal device, wherein the fifth spatial filters are spatial filters that the terminal device is capable of measuring during the first time period, and the fifth spatial filters comprise the first spatial filter;
a maximum number of first signals measurable by the terminal device, wherein the first signals are reference signals on the fifth cells and/or the fifth spatial filters;
a maximum length of a second cycle supported by the terminal device, wherein the second cycle is a cycle during which the terminal device measures the fifth cells and/or the fifth spatial filters during the first time period; and
a maximum number of second time instants supported by the terminal device, wherein the second time instants are time instants at which the terminal device measures the fifth cells and/or the fifth spatial filters during the first time period.

34. The method of any one of claims 23 to 33, further comprising:
sending, by the network device, sixth information to the terminal device, wherein the sixth information comprises one or more of:
an index of a seventh cell, wherein the seventh cell is a cell configured by the network device to be measured by the terminal device during the first time period, and the seventh cell comprises the first cell;
an index of a seventh spatial filter, wherein the seventh spatial filter is a spatial filter configured by the network device to be measured by the terminal device during the first time period, and the seventh spatial filter comprises the first spatial filter;
an index of a second signal, wherein the second signal is a reference signal on the seventh cell and/or the seventh spatial filter;
a length of a third cycle, wherein the third cycle is a cycle during which the terminal device measures the seventh cell and/or the seventh spatial filter during the first time period; and
an index of a third time instant, wherein the third time instant is a time instant at which the terminal device measures the seventh cell and/or the seventh spatial filter during the first time period.

35. The method of claim 34, wherein the sixth information is related to capability information of the terminal device.

36. The method of any one of claims 23 to 35, wherein the first link quality is obtained by measuring a third signal by the terminal device during the first time period, wherein the third signal is a reference signal on the first cell and/or the first spatial filter.

37. The method of claim 36, wherein the third signal comprises a Synchronization Signal Block (SSB) and/or a Channel State Information-Reference Signal (CSI-RS).

38. A communication method, comprising:
receiving, by a network device, capability information of a terminal device, wherein the capability information of the terminal device is used to represent that the terminal device supports obtaining first link quality and/or supports determining a prediction result based on the first link quality, the prediction result being related to a second cell and/or a second spatial filter where the terminal device dwells during a second time period,
wherein the first link quality is link quality of a first cell and/or a first spatial filter during a first time period, and an end time of the first time period is earlier than a start time of the second time period.

39. The method of claim 38, wherein the capability information of the terminal device comprises one or more of:
a maximum number of fifth cells supported by the terminal device, wherein the fifth cells are cells that the terminal device is capable of measuring during the first time period, and the fifth cells comprise the first cell;
a maximum number of fifth spatial filters supported by the terminal device, wherein the fifth spatial filters are spatial filters that the terminal device is capable of measuring during the first time period, and the fifth spatial filters comprise the first spatial filter;
a maximum number of first signals measurable by the terminal device, wherein the first signals are reference signals on the fifth cells and/or the fifth spatial filters;
a maximum length of a second cycle supported by the terminal device, wherein the second cycle is a cycle during which the terminal device measures the fifth cells and/or the fifth spatial filters during the first time period;
a maximum number of second time instants supported by the terminal device, wherein the second time instants are time instants at which the terminal device measures the fifth cells and/or the fifth spatial filters during the first time period;
a maximum number of sixth cells supported by the terminal device, wherein the sixth cells are cells that the terminal device is capable of dwelling during the second time period, and the sixth cells comprise the second cell;
a maximum number of sixth spatial filters supported by the terminal device, wherein the sixth spatial filters are spatial filters that the terminal device is capable of dwelling during the second time period, and the sixth spatial filters comprise the second spatial filter;
dwelling time of the sixth cells that the terminal device supports obtaining;
dwelling time of the sixth spatial filters that the terminal device supports obtaining; and
a maximum length of the dwelling time of the sixth cells that the terminal device supports obtaining.

40. The method of claim 38 or 39, further comprising:
sending, by the network device, sixth information to the terminal device, wherein the sixth information comprises one or more of:
an index of a seventh cell, wherein the seventh cell is a cell configured by the network device to be measured by the terminal device during the first time period, and the seventh cell comprises the first cell;
an index of a seventh spatial filter, wherein the seventh spatial filter is a spatial filter configured by the network device to be measured by the terminal device during the first time period, and the seventh spatial filter comprises the first spatial filter;
an index of a second signal, wherein the second signal is a reference signal on the seventh cell and/or the seventh spatial filter;
a length of a third cycle, wherein the third cycle is a cycle during which the terminal device measures the seventh cell and/or the seventh spatial filter during the first time period;
an index of a third time instant, wherein the third time instant is a time instant at which the terminal device measures the seventh cell and/or the seventh spatial filter during the first time period;
an index of an eighth cell, wherein the eighth cell is a cell configured by the network device for the terminal device to dwell during the second time period, and the eighth cell comprises the second cell; and
an index of an eighth spatial filter, wherein the eighth spatial filter is a spatial filter configured by the network device for the terminal device to dwell during the second time period, and the eighth spatial filter comprises the second spatial filter.

41. The method of claim 40, wherein the sixth information is related to the capability information of the terminal device.

42. The method of any one of claims 38 to 41, wherein the prediction result comprises one or more of:
an index of the second cell;
dwelling time of the second cell;
link quality of the second cell during the dwelling time of the second cell;
an index of the second spatial filter;
dwelling time of the second spatial filter; and
link quality of the second spatial filter during the dwelling time of the second spatial filter.

43. The method of any one of claims 38 to 42, further comprising:
receiving, by the network device, the prediction result from the terminal device.

44. The method of claim 43, further comprising:
sending, by the network device, second information to the terminal device based on the prediction result, wherein the second information is used for the terminal device to perform cell switch and/or spatial filter switch, and the second information is used to indicate one or more of:
an index of a third cell;
dwelling time of the third cell;
an index of a third spatial filter; and
dwelling time of the third spatial filter,
wherein the third cell is one or more of the second cells, and the third spatial filter is one or more of the second spatial filters.

45. The method of claim 44, wherein the second information is carried by Medium Access Control Control Element (MAC CE) signaling or Downlink Control Information (DCI) signaling.

46. The method of claim 43, further comprising:
sending, by the network device, third information to the terminal device, wherein the third information is used to instruct the terminal device to perform cell switch and/or spatial filter switch based on the prediction result.

47. The method of any one of claims 38 to 46, wherein the first link quality is obtained by measuring a third signal by the terminal device during the first time period, wherein the third signal is a reference signal on the first cell and/or the first spatial filter.

48. The method of claim 47, wherein the third signal comprises a Synchronization Signal Block (SSB) and/or a Channel State Information-Reference Signal (CSI-RS).

49. A communication apparatus, implemented by a terminal device, the apparatus comprising:
a first processing unit, configured to obtain first link quality, wherein the first link quality is link quality of a first cell and/or a first spatial filter during a first time period, the first link quality is used to determine a prediction result, the prediction result is related to a second cell and/or a second spatial filter where the terminal device dwells during a second time period, and an end time of the first time period is earlier than a start time of the second time period.

50. A communication apparatus, implemented by a network device, the apparatus comprising:
a second receiving unit, configured to receive first link quality from a terminal device, wherein the first link quality is link quality of a first cell and/or a first spatial filter during a first time period, the first link quality is used to determine a prediction result, the prediction result is related to a second cell and/or a second spatial filter where the terminal device dwells during a second time period, and an end time of the first time period is earlier than a start time of the second time period.

51. A communication apparatus, implemented by a network device, the apparatus comprising:
a third receiving unit, configured to receive capability information of a terminal device, wherein the capability information of the terminal device is used to represent that the terminal device supports obtaining first link quality; and/or supports determining a prediction result based on the first link quality, the prediction result being related to a second cell and/or a second spatial filter where the terminal device dwells during a second time period,
wherein the first link quality is link quality of a first cell and/or a first spatial filter during a first time period, and an end time of the first time period is earlier than a start time of the second time period.

52. A communication device, comprising:
a memory, configured to store a computer program;
a processor, connected to the memory, configured to invoke and run the computer program from the memory to implement the method of any one of claims 1 to 22, or implement the method of any one of claims 23 to 37, or implement the method of any one of claims 38 to 48; and
a transceiver, configured to receive and transmit information from and to other external devices.

53. A chip, wherein the chip comprises:
a memory, configured to store a computer program;
a processor, connected to the memory, configured to invoke and run the computer program from the memory to cause a device equipped with the chip to perform the method of any one of claims 1 to 22, or perform the method of any one of claims 23 to 37, or perform the method of any one of claims 38 to 48; and
a transceiver, configured to receive and transmit information from and to a device or a chip.

54. A computer-readable storage medium, having stored a computer program that, when executed by at least one processor, implements the method of any one of claims 1 to 22, or implements the method of any one of claims 23 to 37, or implements the method of any one of claims 38 to 48.
